# EUROPÄISCHE PATENTSCHRIFT

(11) **EP 3 213 021 B1**
(45) Veröffentlichungstag und Bekanntmachung des Hinweises auf die Patenterteilung: **20.05.2020**
(21) Anmeldenummer: 15813252.2
(22) Anmeldetag: 28.10.2015
(51) Int. Cl.: F27B 3/18, C21C 5/56, F27D 13/00, F27D 99/00, F27B 14/02, F27B 14/06, F27D 11/08, F27B 14/08

(54) **SCHMELZVORRICHTUNG UND SCHMELZVERFAHREN**
MELTING DEVICE AND MELTING METHOD
DISPOSITIF DE FUSION ET PROCÉDÉ DE FUSION

(30) Priorität: 28.10.2014 DE 102014115671
(43) Veröffentlichungstag der Anmeldung: 06.09.2017
(73) Patentinhaber: ECO-E AG, 8808 Pfäffikon (CH)
(72) Erfinder: FUCHS, Gerhard, 77694 Kehl-Bodersweier (DE)
(74) Vertreter: Strässle, Simon
(86) Internationale Anmeldenummer: PCT/DE2015/100454
(87) Internationale Veröffentlichungsnummer: WO 2016/066163

(56) Entgegenhaltungen:
- DE-A1- 19 900 123
- JP-A- H04 309 789
- US-A1- 2003 122 290

## Beschreibung

Die vorliegende Erfindung betrifft eine Schmelzvorrichtung gemäß dem Oberbegriff des Patentanspruchs 1 und ein Schmelzverfahren gemäß dem Oberbegriff des Patentanspruchs 16.

Eine Schmelzvorrichtung, die aus der DE 34 21 485 bekannt ist und vom Erfinder der vorliegenden Erfindung entwickelt wurde, umfasst ein Ofengefäß und eine Chargiergutbeschickungsvorrichtung, wobei die Chargiergutbeschickungsvorrichtung einen Chargiergutschacht aufweist, der als Chargiergutvorwärmeinrichtung ausgebildet ist, und wobei die Chargiergutvorwärmeinrichtung eingerichtet ist, Chargiergut in dem Chargiergutbeschickungsschacht durch Ofengas vorzuwärmen. Das Einschmelzen des Chargierguts erfolgt in Schmelzzyklen. Jeder Schmelzzyklusumfasst umfasst bis zum Abstich (Ausgießen der Schmelze) die Beschickung mit mehreren Chargen. Die einzelnen Chargen gelangen durch den Chargiergutbeschickungsschacht in das Ofengefäß. Während die erste Charge beispielsweise in dem Ofengefäß geschmolzen wird, wird die zweite Charge zunächst in den Chargiergutbeschickungsschacht gefüllt und dort vorgewärmt. Ein Nachteil dieser Schmelzvorrichtung liegt darin, dass es nicht möglich ist, bereits die erste Charge, die zu einem nachfolgenden Schmelzzyklus gehört, durch Ofengas vorzuwärmen, bevor der Abstich für den vorhergehenden Schmelzzyklus erfolgt ist, da die erste Charge des nachfolgenden Schmelzzyklus beim Abstich hinderlich wäre. Dies führt zu einer ineffizienten Energienutzung.

Um diesen Nachteil zu beheben, werden in einer neueren Schmelzvorrichtung, die aus der aus der DE 39 40 558 bekannt ist und ebenfalls vom Erfinder der vorliegenden Erfindung entwickelt wurde, Sperrelemente verwendet. Auf Grund der Sperrelemente kann die erste Charge, die zu einem nachfolgenden Schmelzzyklus gehört, bereits in den Chargiergutbeschickungsschacht gefüllt werden und durch Ofengas vorgewärmt werden, bevor der Abstich für den vorhergehenden Schmelzzyklus erfolgt ist, wobei die Sperrelemente verhindern, dass die erste Charge des nachfolgenden Schmelzzyklus während des Abstichs in das Ofengefäß nachrutscht und den Abstich behindert. Für die Sperrelemente wird in der Regel eine Wasserkühlung verwendet. Ein Nachteil dieser Schmelzvorrichtung liegt darin, dass für diese Wasserkühlung viel Energie benötigt wird. Die Sperrelemente sind außerdem thermischem Stress ausgesetzt und können durch aufschlagendes Chargiergut beschädigt werden. Aus der EP 0 971 193 sind Sperrelemente bekannt, welche die damit verbundenen Schwierigkeiten lindern. Auch diese Sperrelemente benötigen jedoch viel Energie für die Wasserkühlung.

Aus der DE 20 2010 016 851 ist eine Schmelzvorrichtung bekannt, welche einen Chargiergutbeschickungsschacht aufweist, der nicht als Chargiergutvorwärmeeinrichtung ausgebildet ist, aber einen Chargiergutbunker aufweist, der als Chargiergutvorwärmeinrichtung ausgebildet ist. Diese Schmelzvorrichtung erfordert keine Sperrelemente. Ein Vorwärmen findet in dem Chargiergutbeschickungsschacht nicht statt. Das Ofengas, welches zum Vorwärmen des Chargierguts in dem Chargiergutbunker verwendet wird, hat sich kaum abgekühlt, wenn es den Chargiergutbunker erreicht, weshalb der Chargiergutbunker wassergekühlt ausgebildet ist. Diese Kühlung erfordert viel Energie.

Außerdem hat das Ofengas noch eine hohe Temperatur, wenn es den Chargiergutbunker verlässt. Um auch diese Wärmeenergie des Ofengases zum Vorwärmen des Chargierguts zu verwenden, ist eine zusätzliche Chargiergutvorwärmeinrichtung notwendig, die einen zusätzlichen konstruktiven Aufwand erfordert.

Aus der WO 2012/062254 ist eine Schmelzvorrichtung mit einem Ofengefäß und einer Chargiergutbeschickungsvorrichtung bekannt, wobei die Chargiergutbeschickungsvorrichtung einen Chargiergutschacht und einen Chargiergutbunker aufweist, wobei der Chargiergutschacht als Chargiergutvorwärmeinrichtung ausgebildet ist, wobei die Chargiergutvorwärmeinrichtung eingerichtet ist, Chargiergut in dem Chargiergutbeschickungsschacht durch Ofengas vorzuwärmen. Die Schmelzvorrichtung ist außerdem derart ausgebildet, dass kaum Ofengas unkontrolliert in die Umgebung gelangt. Die Schmelzvorrichtung benötigt außerdem keine Sperrelemente. Der Chargiergutschacht ist derart ausgebildet und angeordnet, dass Chargiergut nicht allein auf Grund der Schwerkraft durch den Chargiergutschacht in das Ofengefäß gelangt. Um das Chargiergut aus dem Chargiergutschacht in das Ofengefäß zu bewegen, ist ein Schieber vorgesehen. Der Chargiergutbunker ist von dem Chargiergutschacht durch eine horizontal verfahrbare Trennwand getrennt. Diese Trennwand wird zusammen mit einem horizontal verfahrbaren Schieber verfahren, welcher das Chargiergut von dem Chargiergutbunker in den Chargiergutschacht befördert. Dabei fährt die Trennwand selbst in den Chargiergutschacht und kann erst dann zurückgefahren werden, wenn die Chargiergutsäule in dem Chargiergutschacht hinreichend abgesunken ist, woraufhin erst dann eine weitere Charge in den Chargiergutbunker gefüllt und dann in den Chargiergutschacht weiterbefördert werden kann, um dort vorgewärmt zu werden. Die Zeit, die benötigt wird, bis die Trennwand zurückgefahren wird, steht daher nicht für das Vorwärmen der weiteren Charge zur Verfügung. In der Praxis hat sich außerdem gezeigt, dass die Trennwand schnell beschädigt wird, sodass Ofengas durch die beschädigte Trennwand während des Beladens des Chargiergutbunkers unkontrolliert entweichen kann.

Eine Schmelzvorrichtung mit einer Schwenkeinrichtung, um ein Ofengefäß in unterschiedliche Schwenkpositionen zu schwenken, ist aus der DE 39 06 653 und der DE 199 00 123 A1 bekannt.

Das Ofengefäß weist eine Ofengefäßöffnung auf. Der Beschickungsschacht weist eine Schachtöffnung auf. Während des Schmelzbetriebs der Schmelzvorrichtung rutscht Chargiergut von dem Beschickungsschacht durch die Schachtöffnung und die Ofengefäßöffnung in das Ofengefäß. Wenn die Schlacke oder die Schmelze ausgegossen werden soll, muss das Ofengefäß mithilfe der Schwenkvorrichtung geschwenkt werden. Dazu ist es jedoch zuerst erforderlich, den Beschickungsschacht anzuheben und auf die Seite zu bewegen. Dadurch entsteht eine Öffnung, durch welche Ofengas entweichen bzw. Luft eingezogen werden kann, was zu einem Verlust von Wärmeenergie führt.

Der vorliegenden Erfindung liegt die Aufgabe zugrunde, eine Schmelzvorrichtung und ein Schmelzverfahren zu schaffen, die besonders energieeffizient sind. Die der Erfindung zugrunde liegende Aufgabe wird durch eine Schmelzvorrichtung mit den Merkmalen des kennzeichnenden Teils des Patentanspruchs 1 und ein Schmelzverfahren mit den Merkmalen des kennzeichnenden Teils des Patentanspruchs 16 gelöst.

Die vorliegende Erfindung betrifft eine Schmelzvorrichtung mit einer Kippeinrichtung, um das Ofengefäß in unterschiedliche Kipppositionen zu kippen, wobei das Ofengefäß einen Ofengefäßdichtungsbereich mit einer Dichtungsfläche aufweist, der eine Ofengefäßöffnung umgibt, wobei der dem Ofengefäß zugeordnete Beschickungsschacht einen Schachtdichtungsbereich mit einer komplementären Dichtungsfläche aufweist, der die Schachtöffnung des Beschickungsschachtes umgibt, und wobei die Dichtungsfläche der komplementären Dichtungsfläche für unterschiedliche Kipppositionen der Kippeinrichtung gegenüberliegt. Der Verlust von Wärmeenergie wird dadurch reduziert, dass das unerwünschte Ausströmen von Ofengas zumindest weitgehend mittels der weitgehend anliegenden Dichtungsflächen verhindert wird. Der Verlust von Wärmeenergie wird auch dadurch reduziert, dass das unerwünschte Einziehen von Luft und die damit verbundene Erwärmung dieser Luft verhindert werden. Dadurch erhöht sich die Energieeffizienz der Schmelzvorrichtung. Außerdem wird die Luftqualität in dem Raum verbessert, in dem sich die Schmelzvorrichtung befindet.

In einer bevorzugten Ausführungsform sind die Dichtungsfläche des Ofengefäßdichtungsbereichs als konvexe, zylindermantelabschnittsförmige Fläche und die komplementäre Dichtungsfläche des Schachtdichtungsbereichs eine komplementäre, konkave, zylindermantelabschnittsförmige Kontur aufweist. Eine zylindermantelabschnittsförmige Fläche ist im Zusammenhang mit der vorliegenden Erfindung eine Fläche, die auf einem (fiktiven) Zylindermantel liegt. Vorzugsweise stimmen die Achsen der Zylinder, auf welchen die zylindermantelabschnittsförmige Fläche bzw. Kontur liegt, mit einer Drehachse überein, um welche die Kippeinrichtung gekippt wird, wobei auf der Drehachse vorzugsweise mindestens ein Drehgelenk liegt. Die komplementäre Dichtungsfläche des Beschickungsschachts weist vorzugsweise auf zwei gegenüberliegenden Seiten zwei Dichtungselemente auf, die in einer Kippposition über die Dichtungsfläche des Ofengefäßdichtungsbereichs hinausragen.

In noch einer bevorzugten Ausführungsform, die auch unabhängig von der vorstehenden Ausführung der Erfindung einsetzbar ist, weist ein der Beschickungsvorrichtung vorangestellter Chargiergutbunker eine Beschickungsöffnung mit einem Beschickungsöffnungsverschlusselement und eine Ladeöffnung mit einem Ladeöffnungsverschlusselement auf. Vorzugsweise ist der Chargiergutschacht mit dem Chargiergutbunker über die Beschickungsöffnung verbunden. Vorzugsweise wird Chargiergut in den Chargiergutbunker durch die Ladeöffnung geladen. Das Beschickungsöffnungsverschlusselement verhindert, dass Ofengas während des Befüllens des Chargiergutbunkers, wenn die Ladeöffnung offen ist, aus dem Beschickungsschacht in den Chargiergutbunker und dann weiter durch die Ladeöffnung strömt. Das Beschickungsöffnungsverschlusselement verhindert, dass Ofengas nach dem Befüllen des Chargiergutbunkers, wenn die Beschickungsöffnung offen ist, aus dem Chargiergutbunker durch die Ladeöffnung strömt. Das Ladeöffnungsverschlusselement und das Beschickungsöffnungsverschlusselement verhindern auch das Einziehen von Luft von außen. Der Verlust von Wärmeenergie wird dadurch reduziert, dass das unerwünschte Ausströmen von Ofengas verhindert wird. Der Verlust von Wärmeenergie wird auch dadurch reduziert, dass das unerwünschte Einziehen von Luft und die damit verbundene Erwärmung dieser Luft verhindert werden. Dadurch erhöht sich die Energieeffizienz der Schmelzvorrichtung weiter. Außerdem wird die Luftqualität in dem Raum verbessert, in dem sich die Schmelzvorrichtung befindet.

Vorzugsweise ist das Beschickungsöffnungsverschlusselement zum Öffnen der Beschickungsöffnung in einen Bereich außerhalb des Chargiergutschachts verschiebbar, bewegbar oder verfahrbar. Chargiergut, welches sich in dem Chargiergutschacht befindet, behindert dann nicht das Schließen der Beschickungsöffnung durch das Beschickungsöffnungsverschlusselement, sodass die Beschickungsöffnung frühzeitig geschlossen werden kann, und eine weitere Charge folglich frühzeitig in den Chargiergutbunker gefüllt werden kann, um dort vorgewärmt zu werden. Vorzugsweise ist eine Führung vorgesehen, entlang der das Beschickungsöffnungsverschlusselement verschiebbar, bewegbar oder verfahrbar ist. Vorzugsweise ist das Beschickungsöffnungsverschlusselement vertikal verfahrbar. Die Bewegungsrichtung des Beschickungsöffnungsverschlusselements hat also vorzugsweise eine vertikale Komponente, wobei die vertikale Komponente vorzugsweise größer ist als eine horizontale Komponente der Bewegungsrichtung. Vorzugsweise ist eine Antriebseinrichtung vorgesehen, um das Beschickungsöffnungsverschlusselement entlang der Führung zu verfahren. Vorzugsweise ist das Ladeöffnungsverschlusselement horizontal verfahrbar. Die Bewegungsrichtung des Ladeöffnungsverschlusselements hat also vorzugsweise eine horizontale Komponente, wobei die horizontale Komponente vorzugsweise größer ist als eine vertikale Komponente der Bewegungsrichtung. Vorzugsweise ist eine Antriebseinrichtung vorgesehen, um das Ladeöffnungsverschlusselement entlang einer Führung zu verfahren.

Der Chargiergutbunker mündet über die Beschickungsöffnung in den Beschickungsschacht, der in vorteilhafter Ausführung mit einem Gasauslass versehen ist. Über diese Gasauslassöffnung kann etwa mittels eines Gaskanals Ofengas abgesaugt werden. Hierzu muss die Beschickungsöffnung des Beschickungsschachtes mittels eines Verschlusselementes verschlossen sein. Das durch den Beschickungsschacht zum Gasauslass strömende Ofengas erwärmt bestimmungsgemäß das in dem Beschickungsschacht aufgenommene Chargiergut im Sinne einer Vorwärmung.

In noch einer weiteren bevorzugten Ausführungsform weist der Chargiergutbunker eine weitere Gasauslassöffnung auf. Durch die Gasauslassöffnung wird insbesondere dann Ofengas aus dem Chargiergutbunker abgezogen, wenn die Ladeöffnung durch das Ladeöffnungsverschlusselement verschlossen ist und die Beschickungsöffnung offen ist, so dass das Ofengas durch den Beschickungsschacht in den Chargiergutbunker strömen kann. Vorzugsweise mündet ein Gaskanal in die weitere Gasauslassöffnung. Eine Gasabsaugeinrichtung zieht das Ofengas durch den Gaskanal ab. Diese Gasabsaugeinrichtung kann mit der vorgenannten Gasabsaugeinrichtung identisch sein. Vorzugsweise ist die weitere Gasauslassöffnung an einem von der Beschickungsöffnung des Beschickungsschachtes abgewandten Ende des Chargiergutbunkers angeordnet.

In einer Weiterbildung der letztgenannten bevorzugten Ausführungsform mündet ein Gaskanal in der Gasauslassöffnung; weist der Gaskanal einen Kanalabschnitt auf, der unter einem Boden eines Bunkerbehälters des Chargiergutbunkers zu einem Rohrgelenk verläuft, das in einer Drehachse des Bunkerbehälters liegt. Hierdurch ist sichergestellt, dass der Abzug des Ofengases durch den Kanalabschnitt nicht die Verschwenkbarkeit des Bunkerbehälters beeinträchtigt. Vorzugsweise mündet in dem Rohrgelenk ein weiterer Kanalabschnitt, um Ofengas weiterzuleiten. Die Kanalabschnitte sind vorzugsweise als Rohre ausgebildet. Im Zusammenhang mit der vorliegenden Erfindung ist ein Rohrgelenk eine Einrichtung, die eine gelenkige Fluidverbindung zwischen zumindest zwei Rohren oder dergleichen herstellt. Vorteilhafterweise kommt diese Weiterbildung mit einem Minimum an Rohrgelenken und Rohrabschnitten aus.

In noch einer weiteren bevorzugten Ausführungsform, die ebenfalls unabhängig von den vorherigen Ausgestaltungen der Erfindung einsetzbar ist, ist eine Ofengashemmeinrichtung mit einem Gebläse vorgesehen. Das Gebläse ist vorzugsweise in einem Durchgang zwischen zwei Bereichen vorgesehen und unterbricht oder behindert zumindest das Strömen von Ofengas von einem der Bereiche zu dem anderen der Bereiche, indem das Gebläse ein Gas, vorzugsweise Luft, entlang einer Querschnittsfläche des Durchgangs einbläst. Dadurch kann die Luftqualität in dem Raum verbessert werden, in dem sich die Schmelzvorrichtung befindet. Die Ofengashemmeinrichtung ermöglicht es, auf ein mechanisches Verschlusselement in einem Bereich zu verzichten, in dem insbesondere eine Beschädigung durch Chargiergut auftreten kann. Dabei ist die Ofengashemmeinrichtung schwenkbar vorzugsweise oben an einem Durchgang angebracht, wobei die Ofengashemmeinrichtung vorzugsweise hoch- und runtergeschwenkt werden kann. Vorzugsweise umfasst die Ofengashemmeinrichtung eine Trennwand. Diese Trennwand kann einen oberen Teil eines Durchgangs sperren, sodass das Strömen von Ofengas nur in einem unteren Teil des Durchgangs, wo Chargiergut in der Regel ausschließlich anzutreffen ist, durch Einblasen von Gas bzw. Luft gehemmt werden muss. Alternativ kann auch eine Verfahreinrichtung vorgesehen sein, um die Ofengashemmeinrichtung hoch und runter zu verfahren.

In einer Weiterbildung der letztgenannten bevorzugten Ausführungsform ist die Ofengashemmeinrichtung in dem Chargiergutbeschickungsschacht vorgesehen. Die Ofengashemmeinrichtung hemmt ein Strömen von Ofengas von dem Chargiergutbeschickungsschacht zu einem Bunkerbehälter, von wo es entweichen könnte. Vorzugsweise ist die Ofengashemmeinrichtung stromabwärts von einer Gausauslassöffnung in dem Chargiergutbeschickungsschacht vorgesehen, sodass Ofengas durch die Gasauslassöffnung in dem Chargiergutbeschickungsschacht eingesaugt werden kann.

In noch einer bevorzugten Ausführungsform, die ebenfalls unabhängig von den vorherigen Ausführungen der Erfindung einsetzbar ist, ist eine Schwenkeinrichtung für einen zusätzlichen Chargiergutbehälter vorgesehen, um den zusätzlichen Chargiergutbehälter von einer Ladestellung zu einer Entladestellung zu schwenken und umgekehrt, und weist die Schwenkeinrichtung zwei Tragarme auf, um den zusätzlichen Chargiergutbehälter auf zwei gegenüberliegenden Seiten zu halten. Vorzugsweise befindet sich am Boden des zusätzlichen Chargiergutbehälters eine verschließbare Entladeöffnung. Die Schwenkeinrichtung kann vor allem auf Grund von Platzbeschränkungen verwendet werden.

Die vorliegende Erfindung betrifft ferner eine Schmelzvorrichtung mit einem Ofengefäß und einer Chargiergutbeschickungsvorrichtung, wobei die Chargiergutbeschickungsvorrichtung einen Chargiergutschacht und einen Chargiergutbunker aufweist, wobei der Chargiergutschacht als Chargiergutvorwärmeinrichtung ausgebildet ist, wobei die Chargiergutvorwärmeinrichtung eingerichtet ist, Chargiergut in dem Chargiergutbeschickungsschacht durch Ofengas vorzuwärmen, wobei der Chargiergutbunker als eine weitere Chargiergutvorwärmeinrichtung ausgebildet ist, und wobei die weitere Chargiergutvorwärmeinrichtung eingerichtet ist, Chargiergut in dem Chargiergutbunker durch Ofengas vorzuwärmen. Im Zusammenhang mit der vorliegenden Erfindung ist die Chargiergutvorwärmeeinrichtung dann eingerichtet, Chargiergut in dem Beschickungsschacht durch Ofengas (Gas aus einem Schmelzgefäßinneren) vorzuwärmen, wenn der Chargiergutbeschickungsschacht einen Raum umfasst, durch welchen das Ofengas aus dem Ofengefäß auf Grund einer Druckdifferenz strömt, die beispielsweise durch eine Absaugeinrichtung, welche das Ofengas absaugt, hervorgerufen wird, wobei der Raum außerdem eine Charge Chargiergut während eines normalen Schmelzvorgangs für einen wesentlichen Zeitraum von mindestens einer Minute, vorzugsweise von fünf Minuten, noch bevorzugter von mindestens zehn Minuten, enthält. Das Chargiergut kann sich in dem Raum bewegen, während es in diesem enthalten ist. Der Raum kann beispielsweise auf Grund einer besonderen Dimensionierung geeignet sein, Chargiergut während eines normalen Schmelzvorgangs für einen wesentlichen Zeitraum zu enthalten. Beispielsweise kann die Form, Ausbildung oder Dimensionierung des Schmelzgefäßes und/oder Beschickungsschachts dazu führen, dass sich in dem Beschickungsschacht eine Chargiergutsäule bildet. Analog ist im Zusammenhang mit der vorliegenden Erfindung die weitere Chargiergutvorwärmeinrichtung dann eingerichtet, Chargiergut in dem Chargiergutbunker durch Ofengas (Gas aus einem Schmelzgefäßinneren) vorzuwärmen, wenn der Chargiergutbunker einen weiteren Raum umfasst, durch welchen das Ofengas aus dem Ofengefäß auf Grund einer Druckdifferenz strömt, die beispielsweise durch eine Absaugeinrichtung, welche das Ofengas absaugt, hervorgerufen wird, wobei der weitere Raum eine Charge Chargiergut während eines normalen Schmelzvorgangs für einen wesentlichen Zeitraum von mindestens einer Minute, vorzugsweise fünf Minuten, noch bevorzugter mindestens zehn Minuten, enthält. Vorzugsweise ist der Chargiergutschacht so ausgebildet und/oder vorgesehen, dass Chargiergut auf Grund der Schwerkraft von dem Chargiergutschacht in das Ofengefäß gelangt, sodass keine weitere Einrichtung erforderlich ist, um das Chargiergut von dem Chargiergutschacht in das Ofengefäß zu befördern. Dies kann insbesondere durch eine schräge Ausbildung einer nach oben weisenden Wandinnenfläche des Chargiergutschachts und der Lage des Durchgangs von dem Chargiergutschacht zu dem Ofengefäß oben an dem Ofengefäß erreicht werden.

Durch Kombination des Beschickungsschachtes, der als Chargiergutvorwärmeeinrichtung ausgebildet ist, mit dem Chargiergutbunker, der als Chargiergutvorwärmeeinrichtung ausgebildet ist, wird erreicht, dass sich Ofengas, welches von dem Beschickungsschacht zu dem Chargiergutbunker strömt, bereits wesentlich abgekühlt hat. Daher muss der Chargiergutbunker keine oder kaum Kühleinrichtungen aufweisen, die ihrerseits Energie verbrauchen. Wenn das Ofengas aus dem Chargiergutbunker geströmt ist, ist es außerdem bereits stark abgekühlt, sodass keine weitere Vorwärmeinrichtung erforderlich ist, um die Wärmeenergie aus dem Ofengas zu ziehen und dadurch eine Energieverschwendung zu vermeiden. Durch die Kombination wird also ein synergetischer Effekt erzielt. Durch den Verzicht auf wassergekühlte Sperrelemente werden ca. fünf Prozent der für das Schmelzverfahren benötigten Energie eingespart.

Gemäß dem geltenden Anspruch 10, dessen Ausführung ebenfalls unabhängig einsetzbar ist, kann der Bunker auf einem Podest derart verfahrbar angeordnet sein, dass er mittels eines Fahrgestells an eine Kippvorrichtung herangeführt wird, mittels derer die Entleerung des Bunkerbehälters des Bunkers in den Beschickungsschacht der Schmelzvorrichtung ermöglicht ist. Dies hat den Vorteil, dass die Bunkerbehälter mit dem Chargiergut, die in den Bunker einsetzbar sind, nur über die Höhe des Podestes so weit angehoben werden müssen, dass diese in den Bunker einsetzbar oder entleerbar sind. Anders ausgedrückt bedeutet dies, dass die Bunkerbehälter nicht etwa auf eine Höhe oberhalb der Beschickungsöffnung des Beschickungsschachtes angehoben werden müssen, so dass die Schmelzvorrichtung in der Regel mit den bestehenden Kränen beschickt werden könne. Es müssen, also keine neuen oder zusätzlichen Kräne beschafft werden, die es ermöglichen würden, die Bunker in eine Höhe über die Beschickungsöffnung des Beschickungsschachtes anzuheben. Außerdem müssen dementsprechend etwa vorhandene Hallen zur Aufnahme der erfindungsgemäßen Schmelzvorrichtung nicht erhöht werden, so dass die erfindungsgemäße Schmelzvorrichtung in einer Bestandshalle errichtet werden kann.

Gemäß einer vorteilhaften Weiterbildung dieser Lösung ist das Podest so ausgebildet, dass zusätzlich zu dem bereits an die Beschickungsöffnung des Beschickungsschachtes zum Zwecke der Entleerung herangefahrenen Bunkers ein weiterer Bunker auf dem Podest auf derselben Schienenanordnung angeordnet werden kann, so dass der erste Bunker nach dessen Entleerung seitlich entfernt werden kann und anschließend der weitere Bunker mittels des Fahrgestell auf dem Podest an die Beschickungsöffnung des Beschickungsschachtes zum Zwecke der Entleerung herangefahren werden kann. Dies bedeutet, dass bei dieser Ausführung das Erfordernis entfällt, einen nachgeführten Bunkerbehälter über den gerade entleerten Bunker anzuheben, um diesen dann durch dessen Ladeöffnung mit dem Chargiergut des nachgeführten Bunkerbehälters zu befüllen. In diesem Falle muss der Kran den nachgeführten Bunkerbehälter also nur über das Podest, aber nicht über den bereits auf dem Podest befindlichen weiteren Bunker anheben. Hierdurch kann die erfindungsgemäße Schmelzvorrichtung in Verbindung mit einem Kran mit einem Aufbau geringerer Höhe bzw. auch in einer Halle mit geringerer Höhe eingesetzt werden.

In abermals vorteilhafter Weiterbildung der Erfindung kann das Podest zusätzlich mittels einer eigenen Hebevorrichtung für einen weiteren Bunkerbehälter versehen sein. Auch in diesem Falle muss dann ein mittels des Krans nachgeführter weiterer Bunkerbehälter nur so weit angehoben werden, dass er auf die Schienen-anordnung des Podestes aufgesetzt werden kann, wobei dann der nachgeführte Bunkerbehälter mittels einer dem Podest zugeordneten Hebevorrichtung angehoben und derart an den gerade entleerten Bunker herangeführt wird, dass anschließend der nachgeführte Bunkerbehälter in den Bunkerbehälter des gerade in den Beschickungsschacht entleerten Bunkers entleerbar ist. Auch bei dieser Lösung wird sichergestellt, dass die Schmelzvorrichtung mit einem Bestandskran beschickbar ist und im Übrigen auch keine höhere Halle benötigt wird.

In einer weiteren vorteilhaften Ausgestaltung ist die Hebevorrichtung zusätzlich so ausgelegt, dass mittels dieser Hebevorrichtung ein nachgeführter weiterer Bunkerbehälter mittels der Hebevorrichtung verschwenkbar ist. Dies hat den Vorteil, dass der nachgeführte Bunker oder Bunkerbehälter auch quer zu dem bereits an den Beschickungsschacht herangeführten Bunker auf das Podest aufsetzbar ist, also nicht in Längsrichtung, sondern in Querrichtung, sodass bei dieser Ausgestaltung ein kürzeres Podest verwendbar ist und dementsprechend ebenfalls der Platzbedarf der Schmelzvorrichtung reduziert ist.

In einer alternativen Ausgestaltung ist die Hebevorrichtung nicht in das Podest zum Abstellen der Bunker bzw. Bunkerbehälter integriert, sondern seitlich neben diesem Podest angeordnet, so dass die nachgeführten Bunker bzw. Bunkerbehälter nicht hinter dem bereits an den Beschickungsschacht zum Zwecke der Entleerung herangeführten Bunker abgesetzt werden, sondern vielmehr neben dem bereits positionierten Bunker, wobei auch bei dieser Ausführung der Platzbedarf dementsprechend reduziert ist.

Die vorliegende Erfindung betrifft ferner ein Schmelzverfahren, welches durch eine Schmelzvorrichtung mit einem Ofengefäß und einer Chargiergutbeschickungsvorrichtung durchgeführt wird, wobei die Chargiergutbeschickungsvorrichtung einen Beschickungsschacht und einen Chargiergutbunker mit einem Bunkerbehälter aufweist, mit folgenden Schritten:
Vorwärmen des Chargierguts in dem Bunkerbehälter durch Ofengas; Weiterbefördern des Chargierguts von dem Bunkerbehälter in den Beschickungsschacht; Vorwärmen des Chargierguts in dem Beschickungsschacht durch Ofengas.

Im Zusammenhang mit der vorliegenden Erfindung bedeutet Vorwärmen des Chargierguts durch Ofengas, dass das Chargiergut für einen wesentlichen Zeitraum von mindestens einer Minute, vorzugsweise von fünf Minuten, noch bevorzugter mindestens zehn Minuten, dem Ofengas während eines normalen Schmelzvorgangs ausgesetzt wird. Das Vorwärmen des Chargierguts in dem Chargiergutbunker durch Ofengas dauert also einen wesentlichen Zeitraum von mindestens einer Minute, vorzugsweise fünf Minuten, noch bevorzugter mindestens zehn Minuten. Während des Vorwärmens des Chargierguts in dem Chargiergutbunker durch Ofengas kann sich das Chargiergut in dem Chargiergutbunker bewegen. Das Vorwärmen des Chargierguts in dem Beschickungsschacht durch Ofengas dauert also einen Zeitraum von mindestens einer Minute, vorzugsweise fünf Minuten, noch bevorzugter mindestens zehn Minuten. Während des Vorwärmens des Chargiergutes in dem Beschickungsschacht durch Ofengas kann sich das Chargiergut in dem Beschickungsschacht bewegen.

In einer bevorzugten Ausführungsform umfasst das Schmelzverfahren mehrere Chargen Chargiergut, wobei für eine der mehreren Chargen Chargiergut die folgenden Schritte hintereinander durchgeführt werden:
Einfüllen der Charge in den Bunkerbehälter durch die Ladeöffnung; Verschließen der Ladeöffnung; Öffnen der Beschickungsöffnung; Vorwärmen der Charge in dem Bunkerbehälter durch Ofengas; Weiterbeförderung der Charge von dem Bunkerbehälter in den Beschickungsschacht und Vorwärmen der Charge in dem Beschickungsschacht durch Ofengas.

Das Vorwärmen in dem Beschickungsschacht wird nicht unbedingt für jede Charge durchgeführt. Für eine erste Charge in einem Schmelzzyklus kann das Vorwärmen in dem Beschickungsschacht beispielsweise entfallen, weil die erste Charge durch den Beschickungsschacht durchrutscht. Die einzelnen Verfahrensschritte können sich dabei für unterschiedliche Chargen im Detail unterscheiden. Beispielsweise kann die Weiterbeförderung einer dritten Charge viel länger dauern als die Weiterbeförderung einer ersten Charge, weil Chargiergut in dem Beschickungsschacht das Nachrutschen der dritten Charge in den Beschickungsschacht behindert. Das Vorwärmen in dem Bunkerbehälter dauert dann auch länger. Vorzugsweise wird die Beschickungsöffnung durch Verschieben, Bewegen oder Verfahren eines Beschickungsöffnungsverschluss-elements geöffnet und geschlossen, wobei das Beschickungsöffnungsverschlusselement beim Öffnen der Beschickungsöffnung in einen Bereich außerhalb des Chargiergutschachts verschoben, bewegt oder verfahren wird. Chargiergut, welches sich in dem Chargiergutschacht befindet, behindert dann nicht das Schließen der Beschickungsöffnung durch das Beschickungsöffnungsverschlusselement, sodass die Beschickungsöffnung frühzeitig geschlossen werden kann und eine weitere Charge frühzeitig in der Chargiergutbunker gefüllt werden kann, um dort vorgewärmt zu werden.

In einer alternativen bevorzugten Ausführungsform umfasst das Schmelzverfahren mehrere Chargen Chargiergut, wobei für eine der mehreren Chargen Chargiergut die folgenden Schritte hintereinander durchgeführt werden:
Einfüllen der Charge in den Bunkerbehälter durch eine Ladeöffnung, während der Eintritt von Ofengas in den Bunkerbehälter durch eine Ofengashemmeinrichtung gehemmt wird; Verschließen der Ladeöffnung; Vorwärmen der Charge in dem Bunkerbehälter durch Ofengas; Weiterbeförderung der Charge von dem Bunkerbehälter in den Beschickungsschacht; Vorwärmen der Charge in dem Beschickungsschacht durch Ofengas.

In einer Weiterbildung der beiden letztgenannten bevorzugten Ausführungsformen wird der Bunkerbehälter gekippt, um die Charge in den Beschickungsschacht weiterzubefördern. Alternativ kann ein Schieber vorgesehen sein, um Chargiergut aus dem Bunkerbehälter in den Beschickungsschacht weiterzubefördern.

Im Folgenden wird die Erfindung mit Bezugnahme auf die Zeichnungen näher beschrieben. Es zeigen:
- FIG. 1: eine perspektivische Ansicht einer Schmelzvorrichtung gemäß einer ersten Ausführungsform in einer Schmelzposition;
- FIG. 2A und FIG. 2B: eine perspektivische Ansicht bzw. eine Schnittansicht der Schmelz-vorrichtung in einer Abstichposition;
- FIG. 3A und FIG. 3B: eine perspektivische Ansicht bzw. eine Schnittansicht der Schmelz-vorrichtung gemäß der ersten Ausführungsform in einer Entschlackungsposition;
- FIG. 4A und FIG. 4B: eine perspektivische Ansicht bzw. eine Schnittansicht der Schmelzvorrichtung gemäß der ersten Ausführungsform in einer Wartungsposition;
- FIG. 5: eine perspektivische Ansicht der Schmelzvorrichtung gemäß der ersten Ausführungsform in der Wartungsposition mit gekipptem Bunker;
- FIG. 6A, 6B, 6C, 6D, 6E: eine Vorderansicht, eine Seitenansicht, eine Rückansicht, eine weitere Seitenansicht bzw. eine Draufsicht der Schmelzvorrichtung gemäß der ersten Ausführungsform;
- FIG. 7A: eine erste Schnittansicht der Schmelzvorrichtung gemäß der ersten Ausführungsform während eines Schmelzzyklus;
- FIG. 7B: eine zweite Schnittansicht der Schmelzvorrichtung gemäß der ersten Ausführungsform während des Schmelzzyklus;
- FIG. 7C: eine dritte Schnittansicht der Schmelzvorrichtung gemäß der ersten Ausführungsform während des Schmelzzyklus;
- FIG. 7D: eine vierte Schnittansicht der Schmelzvorrichtung gemäß der ersten Ausführungsform während des Schmelzzyklus;
- FIG. 7E: eine fünfte Schnittansicht der Schmelzvorrichtung gemäß der ersten Ausführungsform während des Schmelzzyklus;
- FIG. 7F: eine sechste Schnittansicht der Schmelzvorrichtung gemäß der ersten Ausführungsform während des Schmelzzyklus;
- FIG. 8A: eine erste Schnittansicht eines Beschickungsschachts der Schmelzvorrichtung gemäß einer zweiten Ausführungsform;
- FIG. 8B: eine zweite Schnittansicht des Beschickungsschachts der Schmelzvorrichtung gemäß der zweiten Ausführungsform;
- FIG. 8C: eine Ansicht eines Gebläses der Schmelzvorrichtung gemäß der zweiten Ausführungsform;
- FIG. 8D: eine Ansicht einer Ofengashemmeinrichtung der Schmelzvorrichtung gemäß der zweiten Ausführungsform;
- FIG. 9A: eine Teilansicht einer Schmelzvorrichtung gemäß einer dritten Ausführungsform;
- FIG. 9B: eine Teilansicht der Schmelzvorrichtung gemäß der dritten Ausführungsform mit gekipptem Bunker;
- FIG. 10A: eine Teilansicht einer Schmelzvorrichtung gemäß einer vierten Ausführungsform;
- FIG. 10B: eine Schnittansicht durch einen Bunker der Schmelzvorrichtung gemäß der vierten Ausführungsform;
- FIG. 10C: eine Ansicht des Bunkers der Schmelzvorrichtung gemäß der vierten Ausführungsform von unten;
- FIG. 10D: eine Ansicht eines geschlossenen Verschlusselements der Schmelzvorrichtung gemäß der vierten Ausführungsform;
- FIG. 10E: eine Ansicht des geöffneten Verschlusselements der Schmelzvorrichtung gemäß der vierten Ausführungsform;
- FIG. 11A: eine Teilansicht einer Schmelzvorrichtung gemäß einer fünften Ausführungsform mit einer Schwenkeinrichtung für einen zusätzlichen Chargiergutbehälter in einer Ladestellung;
- FIG. 11B: eine Teilansicht der Schmelzvorrichtung gemäß der fünften Ausführungsform mit der Schwenkeinrichtung für den zusätzlichen Chargiergutbehälter in einer Entladestellung;
- FIG. 12: eine Schmelzvorrichtung in einer alternativen Ausgestaltung mit einem Podest in einer perspektivischen Ansicht;
- FIG. 13: die in FIG. 12 gezeigte Schmelzvorrichtung mit einem nachgeführten Bunker in einer perspektivischen Ansicht;
- FIG. 14: einer Weiterbildung der in den FIG. 12 und 13 gezeigten Schmelzvorrichtung mit einer Hebevorrichtung in einer perspektivischen Ansicht;
- FIG. 15: die in FIG. 14 gezeigte Schmelzvorrichtung in einem nachfolgenden Verfahrensschritt in einer perspektivischen Ansicht;
- FIG. 16: eine weitere alternative Schmelzvorrichtung mit einer verschwenkbaren Hebevorrichtung in einer perspektivischen Ansicht;
- FIG. 17: einer abermals alternative Ausgestaltung der Schmelzvorrichtung mit einer seitlich versetzt angeordneten Hebevorrichtung in einer perspektivischen Ansicht und
- FIG. 18: die in FIG. 17 gezeigte Schmelzvorrichtung in einem nachfolgenden Verfahrensschritt in einer perspektivischen Ansicht.

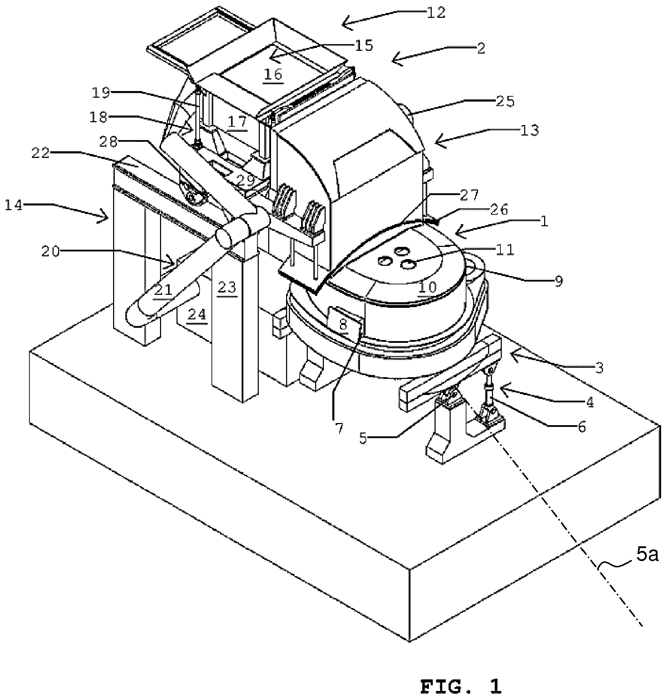

FIG. 1 zeigt eine perspektivische Ansicht der Schmelzvorrichtung gemäß der ersten Ausführungsform in einer Schmelzposition. Bei der Schmelzvorrichtung, die ein Ofengefäß 1 und eine Beschickungsvorrichtung 2 aufweist, handelt es sich um einen Elektrolichtbogenofen zum Einschmelzen von Stahlschrott.

Das Ofengefäß 1 ist auf einer Halterung 3 mit zwei Halterungskomponenten angebracht, die an gegenüberliegenden Enden des Ofengefäßes 1 vorgesehen sind. Eine dieser Halterungskomponenten ist in FIG. 1 größtenteils verdeckt. Jede der Halterungskomponenten umfasst eine Kippvorichtung 4. Die Kippvorrichtung 4 weist jeweils ein Drehgelenk 5 und einen hydraulischen Zylinder 6 auf, der von einer Steuerung (nicht gezeigt) gesteuert wird. Das Ofengefäß 1 umfasst ein Bodengefäß und ein Obergefäß, auf dem sich ein Ofengefäßdeckel 10 befindet. In dem Obergefäß sind auf einer Seite ein Schlackeauslass 7 mit einer Schlacketür 8 und auf der gegenüberliegenden Seite ein Schmelzeauslass 9, der als Erkerabstich ausgebildet ist, vorgesehen. Die Kippeinrichtung 4 ermöglicht es, das Ofengefäß 1 aus der Schmelzposition in eine Entschlackungsposition, in welcher die Schlacke durch den Schlackeauslass 7 in eine Mulde abgelassen wird, und in eine Abstichposition zu kippen, in welcher die Schmelze durch den Schmelzeauslass 9 in eine Pfanne gegossen werden kann. Eine Schmelzposition ist eine Position, in welcher ein Schmelzverfahren üblicherweise stattfindet. In sämtlichen Schmelzpositionen sind das Ofengefäß 1 und die Halterung 3 waagrecht ausgerichtet. Eine Entschlackungsposition ist dementsprechend eine Position, in welcher die Schlacke durch den Schlackeauslass 7 abgelassen werden kann. In sämtlichen Entschlackungspositionen sind das Ofengefäß 1 und die Halterung 3 so geneigt, dass der Schlackeauslass 7 abgesenkt ist. Eine Abstichposition ist dementsprechend eine Position, in welcher die Schmelze durch den Schmelzeauslass 9 ausgegossen werden kann. In sämtlichen Abstichpositionen sind das Ofengefäß 1 und die Halterung 3 so geneigt, dass der Schmelzeauslass 9 abgesenkt ist. Der Ofengefäßdeckel 10 weist drei Elektrodenöffnungen für die Einführung von jeweils einer Lichtbogenelektrode (nicht gezeigt) auf. In dem Ofengefäß 1 sind außerdem zusätzlich mehrere Gasbrenner (nicht gezeigt) vorgesehen.

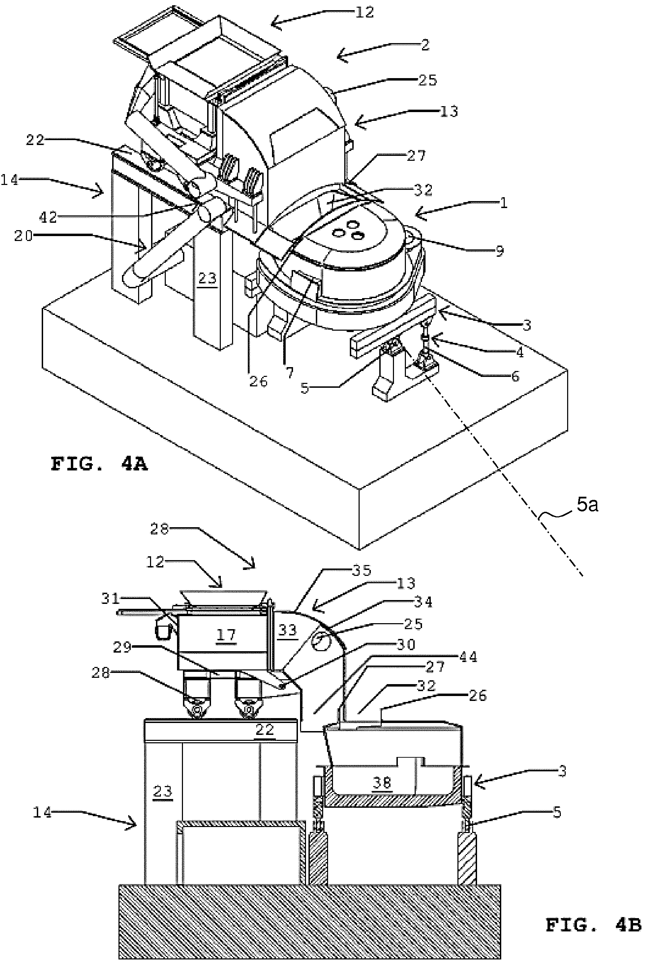

Die Beschickungsvorrichtung 2 weist einen Bunker 12, einen Beschickungsschacht 13 und ein Podest 14 auf. Der Bunker 12 umfasst einen Bunkerbehälter 17, ein Fahrgestell 29 und eine Kippeinrichtung 18. Der Bunkerbehälter 17 umfasst eine vordere Beschickungsöffnung (nicht gezeigt), die durch ein plattenförmiges Verschlusselement (nicht gezeigt) verschließbar ist, und eine obere Ladeöffnung 15, die durch ein plattenförmiges Verschlusselement 16 verschließbar ist. Die plattenförmigen Verschlusselemente werden beispielsweise von einem Zahnstangenmechanismus angetrieben, der von der Steuerung (nicht gezeigt) gesteuert wird. Die Kippeinrichtung 18 umfasst ein Drehgelenk (68, siehe FIG. 4B) und zwei hydraulische Zylinder 19, die hinten an gegenüberliegenden Seiten des Bunkerbehälters 17 vorgesehen sind und von der Steuerung (nicht gezeigt) gesteuert werden. Hinten an dem Bunkerbehälter 17 ist eine Gasauslassöffnung (nicht gezeigt) vorgesehen, in welche ein Gaskanal 20 mündet, der mehrere gelenkig miteinander verbundene Rohrabschnitte 21 aufweist. Durch diese Rohrabschnitte 21 wird Ofengas von einer Gasabsaugeinrichtung 24 abgesaugt. Das Fahrgestell 29 weist vier Rollen 28 auf, wobei jeweils zwei Rollen 28 auf einer Seite des Fahrgestells 29 vorgesehen sind. Oben auf dem Podest 14 sind zwei parallele Schienen 22 vorgesehen, auf denen jeweils zwei der Rollen 28 aufliegen, sodass der Bunker 12 entlang der Schienen 22 verfahrbar ist. Die Rollen 28 werden von einem Motor (nicht gezeigt) angetrieben, der von der Steuerung (nicht gezeigt) gesteuert wird. Jede der Schienen 22 ruht auf den gegenüberliegenden Enden jeweils auf einem Pfeiler 23. Oben an dem Beschickungsschacht 13 ist eine Gasauslassöffnung 25 vorgesehen. In der Gasauslassöffnung 25 mündet ein Gaskanal (nicht gezeigt), durch den Ofengas ebenfalls von der Gasabsaugeinrichtung 24 abgesaugt wird. Der Beschickungsschacht 13 ist mit dem Fahrgestell 29 des Bunkers 12 fest verbunden, sodass der Beschickungsschacht 13 zusammen mit dem Bunker 12 verfahrbar ist. Oben an dem Ofengefäß 10 ist ein Dichtungsbereich 26 des Ofengefäßes 1 vorgesehen, in dem eine Ofengefäßöffnung (nicht gezeigt) ausgebildet ist. Unten an dem Beschickungsschacht 13 ist ein Dichtungsbereich des Beschickungsschachts 13 vorgesehen, in dem eine Schachtöffnung (nicht gezeigt) ausgebildet ist. In der dargestellten Betriebsposition bilden die Ofengefäßöffnung und die Schachtöffnung einen Durchgang für Chargiergut von dem Beschickungsschacht 13 zu dem Ofengefäß 1. An die Schachtöffnung des Beschickungsschachtes 13 sind beidseitig weitere Dichtungselemente 27 angeformt. An die Öffnung des Ofengefäßes 1 sind beidseitig komplementäre Dichtungselemente 26 angeformt. Der Dichtungsbereich des Ofengefäßes 1 schließt eine konvexe, zylindermantelabschnittsförmige Fläche ein, während der Dichtungsbereich des Beschickungsschachts 13 eine komplementäre, konkave zylindermantelabschnittsförmige Fläche einschließt. Die beiden Dichtungsbereiche liegen während des Betriebs der Schmelzvorrichtung so aneinander an, dass zwischen ihnen kaum ein Spalt, jedenfalls ein denkbar schmaler Spalt, ausgebildet ist, und dass kaum Ofengas durch die Dichtungsbereiche aus der Schmelzvorrichtung nach außen dringt, und dass kaum Luft von außen eingezogen wird.

Alternativ kann im Falle eines größeren Spaltes in diesem Bereich auch mit einer Luftsperre gearbeitet werden, die den Spalt gegenüber der Außenumgebung der Schmelzvorrichtung abschirmt. Hierzu können beispielsweise oberhalb des Spaltes an dem Beschickungsschacht außenseitig Gebläse angeordnet sein, die mittels eines Luftschleiers den Spalt gegenüber der Umgebung abschirmen. Die Funktion eines solchen Luftschleiers ist an anderer Stelle in Verbindung mit der Ofengashemmeinrichtung erläutert.

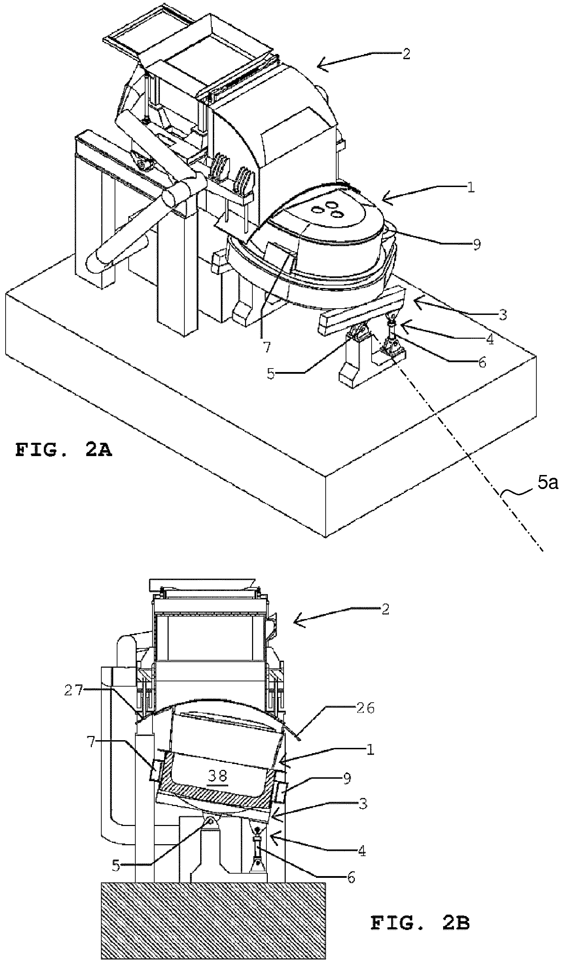

FIG. 2A und FIG. 2B zeigen eine perspektivische Ansicht bzw. eine Schnittansicht der Schmelzvorrichtung gemäß der ersten Ausführungsform in einer Abstichposition. In der Abstichposition ist das Ofengefäß 1 von der Kippvorrichtung 4 durch Betätigung der hydraulischen Zylinder 6 im Uhrzeigersinn so um die Drehgelenke 5 geschwenkt, dass der Schmelzeauslass 9 nach unten geneigt ist, und dass die Schmelze in dem Ofengefäßinnenraum 38 veranlasst wird, durch den Schmelzeauslass 9 aus dem Ofengefäß 1 zu laufen.

Der Dichtungsbereich des Ofengefäßes ist relativ zu dem Dichtungsbereich des Beschickungsschachts 13 verdreht. Die beiden Dichtungsbereiche liegen jedoch trotzdem noch so aneinander an, dass zwischen ihnen kaum ein Spalt ausgebildet ist, und dass kaum Ofengas durch diese Dichtungsbereiche aus der Schmelzvorrichtung nach außen dringt.

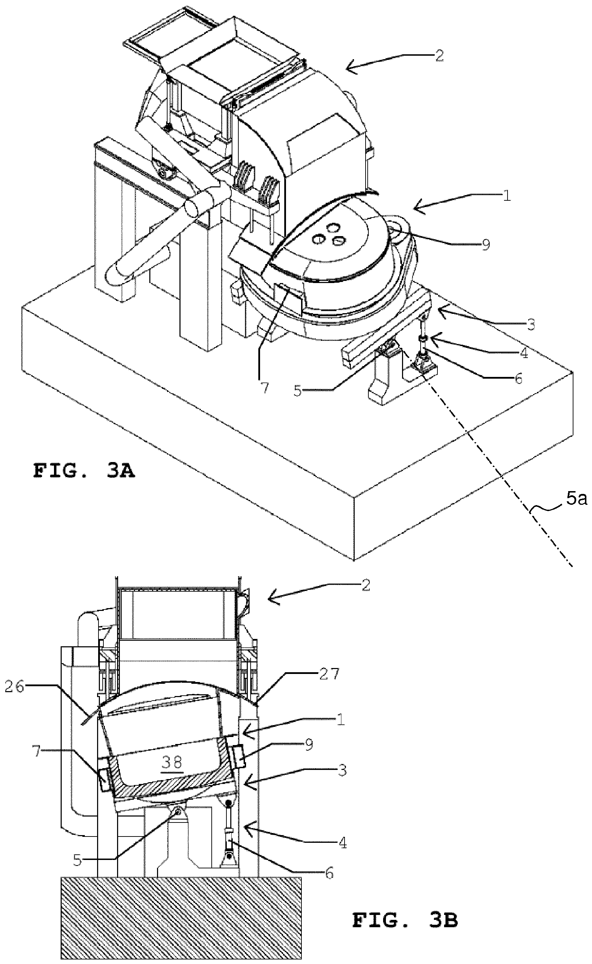

FIG. 3A und FIG. 3B zeigen eine perspektivische Ansicht bzw. eine Schnittansicht der Schmelzvorrichtung gemäß der ersten Ausführungsform in einer Entschlackungsposition. In der Entschlackungsposition ist das Ofengefäß 1 durch Betätigung der hydraulischen Zylinder 6 von der Kippvorrichtung 4 gegen den Uhrzeigersinn so um die Kippachse 5a der Drehgelenke 5 geschwenkt, dass der Schlackeauslass 9 nach unten geneigt ist, und dass die Schlacke in dem Ofengefäßinnenraum 38 veranlasst wird, durch den Schlackeauslass 9 aus dem Ofengefäß 1 abzulaufen. Der Dichtungsbereich 26 des Ofengefäßes 1 ist relativ zu dem Dichtungsbereich 27 des Beschickungsschachtes 13 gekippt. Abschnitte der Dichtungsflächen der beiden Dichtungsbereiche liegen jedoch trotzdem noch so einander gegenüber, dass zwischen diesen Abschnitten der Dichtungsflächen nur ein enger Spalt ausgebildet ist, sodass kaum Ofengas durch diese Dichtungsbereiche aus der Schmelzvorrichtung nach außen dringt.

FIG. 4A und FIG. 4B zeigen eine perspektivische Ansicht bzw. eine Schnittansicht der Schmelzvorrichtung gemäß der ersten Ausführungsform in einer Wartungsposition. Eine Wartungsposition ist eine Position, in welcher eine Wartung üblicherweise stattfindet. In sämtlichen Wartungspositionen ist der Bunker 12 zusammen mit dem Beschickungsschacht 13 zurückgefahren. Durch das Zurückfahren des Bunkers 12 auf den Schienen 22 wird ein Zugang zu der Ofengefäßöffnung 32 geschaffen, sodass auf den Ofengefäßinnenraum 38 zugegriffen werden kann. Das Zurückfahren des Bunkers 12 zusammen mit dem Beschickungsschacht 13 in einer zur Kippachse 5a parallelen Richtung wird durch die Ausgestaltung des Dichtungsbereichs 26 des Ofengefäßdeckels 10 als konvexe, zylindermantelabschnittsförmige Fläche und des Dichtungsbereichs 27 des Beschickungsschachts 13 als komplementäre, konkave, zylindermantelabschnittsförmige Kontur ermöglicht, ohne dass der Beschickungsschacht 13 angehoben werden muss, weil sich zwischen der konvexen Dichtungsfläche des Dichtungsbereichs und der komplementären konkaven Dichtungsfläche (Kontur) des Beschickungsschachtes 13 ein Spalt befindet. Zusätzlich ist eine Gelenkverbindung 42 zwischen zwei Rohrabschnitten des Gaskanals 20 gelöst, sodass auf das Innere der Rohrabschnitte zugegriffen werden kann. Vorne an dem Bunkerbehälter 17 ist ein Schachtanschlusselement 33 fest angebracht. Der Beschickungsschacht 13 weist ein Oberteil 34 mit einer konvexen, zylinderabschnittsförmigen Kontur und zwei gegenüberliegende Seitenteile auf. Das Schachtanschlusselement 33 weist ein Oberteil 35 mit einer komplementären, konkaven, zylinderabschnittsförmigen Fläche und zwei gegenüberliegende Seitenteile auf. Das Oberteil 35 überlappt mit dem Oberteil 34. Die beiden Oberteile 34 und 35 und die Seitenteile des Anschlusselements 33 und des Beschickungsschachts liegen während des Betriebs der Schmelzvorrichtung so aneinander an, dass zwischen ihnen kaum ein Spalt ausgebildet ist, und dass kaum Ofengas durch die Oberteile 34 und 35 und Seitenteile aus der Schmelzvorrichtung nach außen dringt, und dass keine Luft oder kaum Luft von außen eingezogen wird.

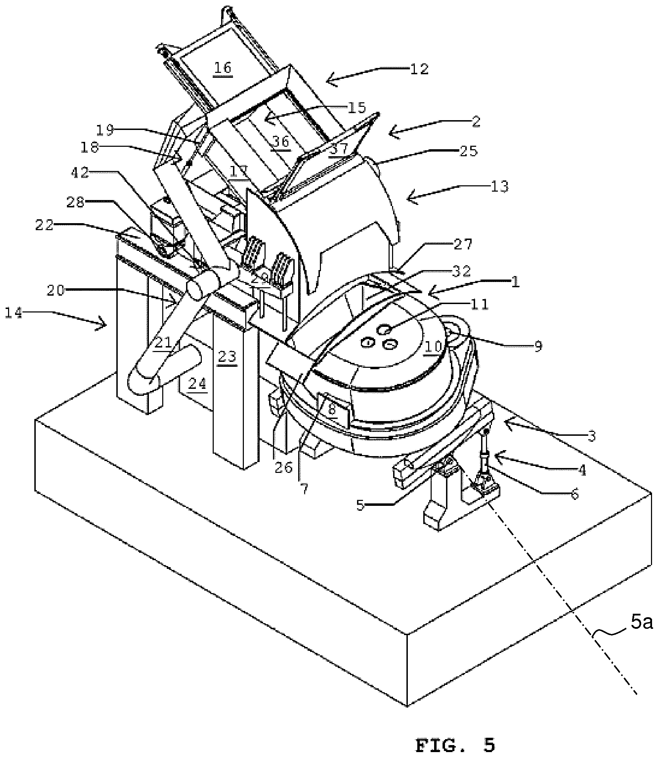

FIG. 5 zeigt eine perspektivische Ansicht der Schmelzvorrichtung gemäß der ersten Ausführungsform in der Wartungsposition mit gekipptem Bunker 12. Die Gelenkverbindung 42 zwischen zwei Rohrabschnitten des Gaskanals 20 ist nicht gelöst. Das Zurückfahren des Bunkers 12 ohne Lösen der Gelenkverbindung 42 wird dadurch ermöglicht, dass in dem Gaskanal 20 mehrere Gelenkverbindungen vorgesehen sind.

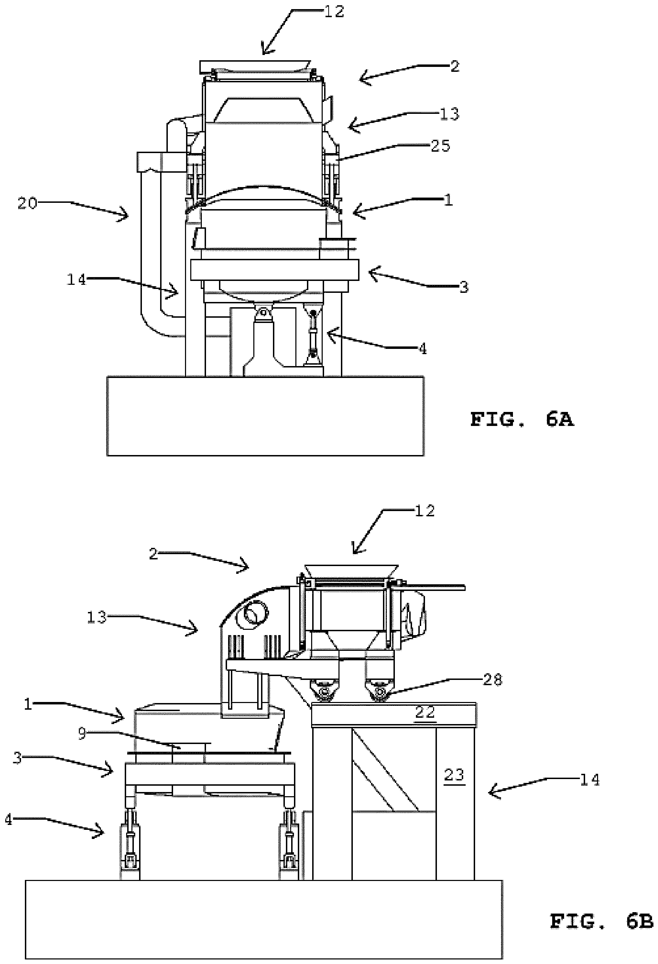

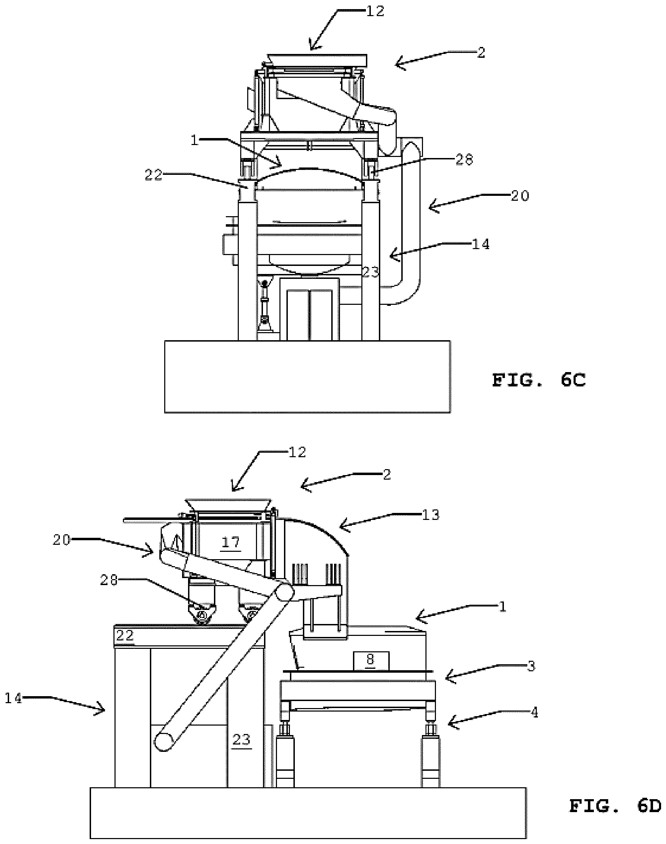

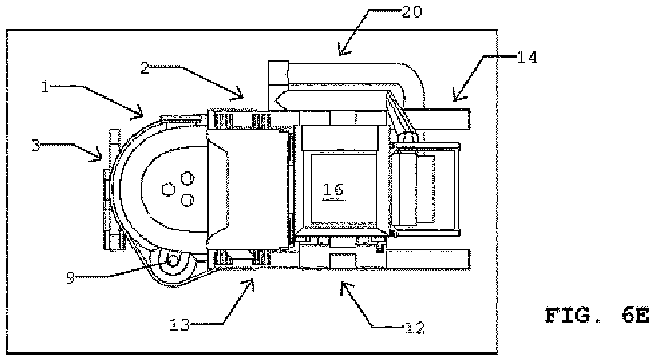

FIG. 6A, FIG. 6B, FIG. 6C, FIG. 6D und FIG. 6E zeigen eine Vorderansicht, eine Seitenansicht, eine Rückansicht, eine weitere Seitenansicht und eine Draufsicht der Schmelzvorrichtung gemäß der ersten Ausführungsform. Die Schmelzvorrichtung befindet sich jeweils in der gleichen Betriebsposition.

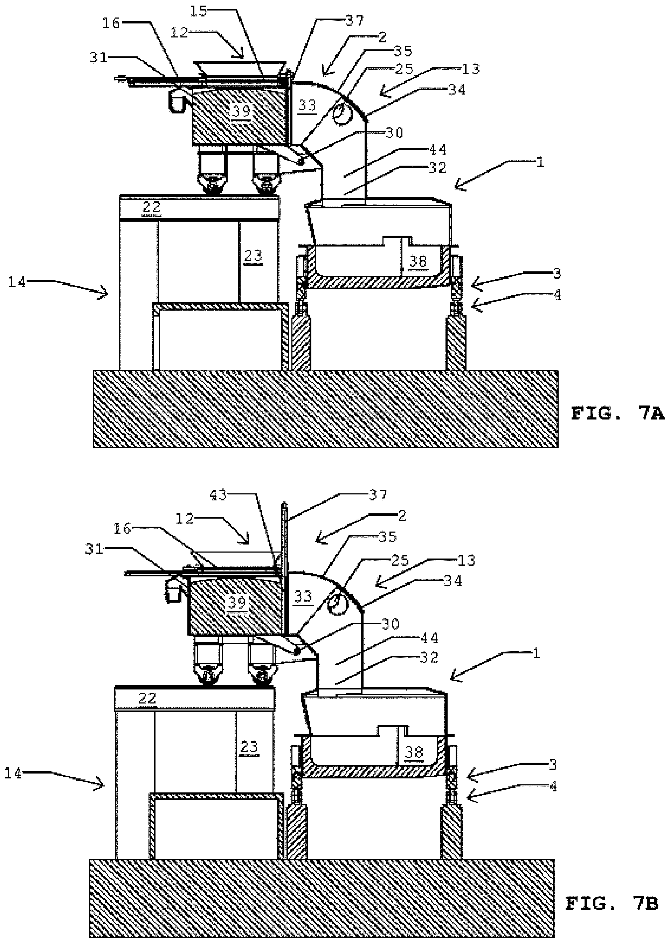

Im Folgenden wird ein Schmelzverfahren anhand der FIG. 7A bis FIG. 7F erläutert, das in Schmelzzyklen abläuft. Jeder Zyklus umfasst das Beschicken der Schmelzvorrichtung mit mehreren Chargen Stahlschrott (typischerweise drei Chargen), das Schmelzen des Stahlschrotts, das Ausgießen der Schmelze und Ablassen der Schlacke. Ausgehend von einem Zustand der Einzelteile der Schmelzvorrichtung, der in FIG. 7A dargestellt ist, werden für jede Charge beim Beschicken die folgenden Schritte durchgeführt:
i.) Einfüllen der jeweiligen Charge Stahlschrott durch die obere Ladeöffnung 15 des Bunkerbehälters 17;
ii.) Verschließen der oberen Ladeöffnung 15 durch Verfahren des Verschlusselements 16;
iii.) Öffnen der vorderen Beschickungsöffnung 43 durch Verfahren (Hochfahren) des Verschlusselements 37, wobei nach dem Öffnen der vorderen Beschickungsöffnung 43 das Ofengas aus dem Schmelzgefäßinnenraum 38 durch die hintere Gasauslassöffnung 31 an dem Bunkerbehälter 17 abgezogen wird;
iv.) Umkippen des Bunkerbehälters 17 aus seiner Ausgangslage, damit die jeweilige Charge Stahlschrott in den Beschickungsschacht 13 rutscht;
v.) Zurückkippen des Bunkerbehälters 17 in seine Ausgangslage;
vi.) Verschließen der vorderen Beschickungsöffnung 43 durch Verfahren (Runterfahren) des Verschlusselements 37, wobei nach dem Verschließen der vorderen Beschickungsöffnung 43 das Ofengas aus dem Schmelzgefäßinnenraum 38 durch die obere Gasauslassöffnung in dem Beschickungsschacht 13 abgezogen wird; und
vii.) Öffnen der oberen Ladeöffnung 15 durch Verfahren des Verschlusselements 16.

Die Schritte i.) bis vii.) laufen normalerweise in der angegebenen Reihenfolge ab, wobei es keine Rolle spielt, ob der Schritt v.) nach dem Schritt vi.) oder vii.) durchgeführt wird.

FIG. 7A zeigt eine erste Schnittansicht der Schmelzvorrichtung gemäß der ersten Ausführungsform während eines Schmelzzyklus nach dem Einfüllen einer ersten Charge Stahlschrott 39 in den Bunkerbehälter 17 (nach dem Schritt i.).

FIG. 7B zeigt eine zweite Schnittansicht der Schmelzvorrichtung gemäß der ersten Ausführungsform während des Schmelzzyklus nach dem Verschließen der oberen Ladeöffnung 15 durch Verfahren des Verschlusselements 16 und nach dem Öffnen der vorderen Beschickungsöffnung 43 durch Verfahren (Hochfahren) des Verschlusselements 37 (nach dem Schritt iii.) für die erste Charge Stahlschrott 39. Ofengas wird aus dem Schmelzgefäßinnenraum 38 durch den Durchgang von der Schmelzgefäßöffnung 32 zu der Schachtöffnung 44, den Beschickungsschacht 13, die Beschickungsöffnung 43, den Bunkerbehälter 17 und schließlich die Gasauslassöffnung 31 abgezogen, wobei das Chargiergut 39 in dem Bunkerbehälter 17 durch das Ofengas vorgewärmt wird.

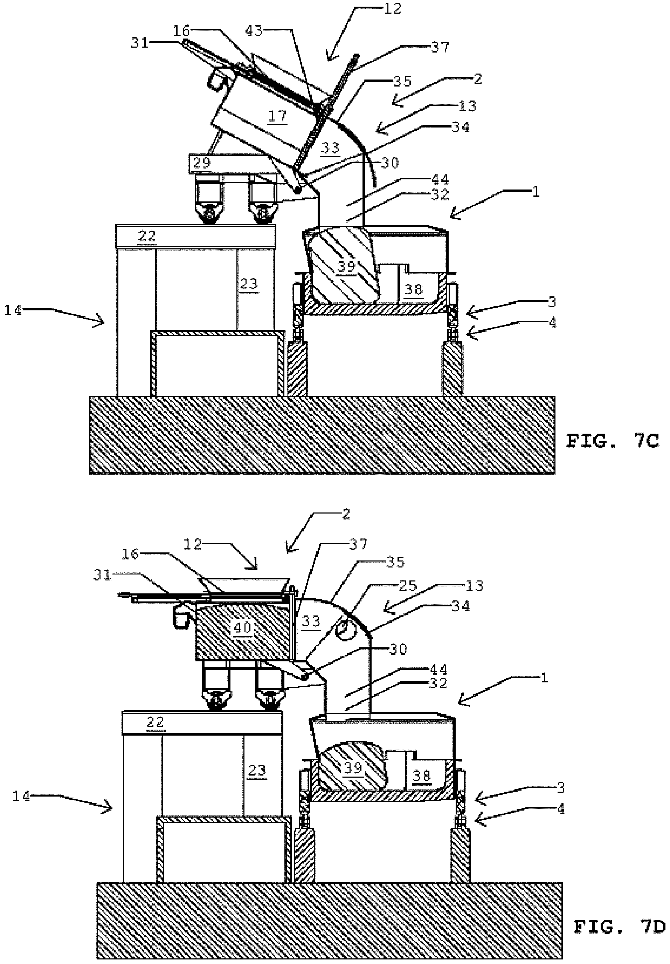

FIG. 7C zeigt eine dritte Schnittansicht der Schmelzvorrichtung gemäß der ersten Ausführungsform während des Schmelzzyklus, nachdem der Bunkerbehälter 17 nach vorne gekippt wurde (nach dem Schritt iv.) für die erste Charge Stahlschrott 39.

FIG. 7D zeigt eine vierte Schnittansicht der Schmelzvorrichtung gemäß der ersten Ausführungsform während des Schmelzzyklus nach dem Einfüllen einer zweiten Charge Stahlschrott 40 in den Bunkerbehälter 17 (nach dem Schritt i.).

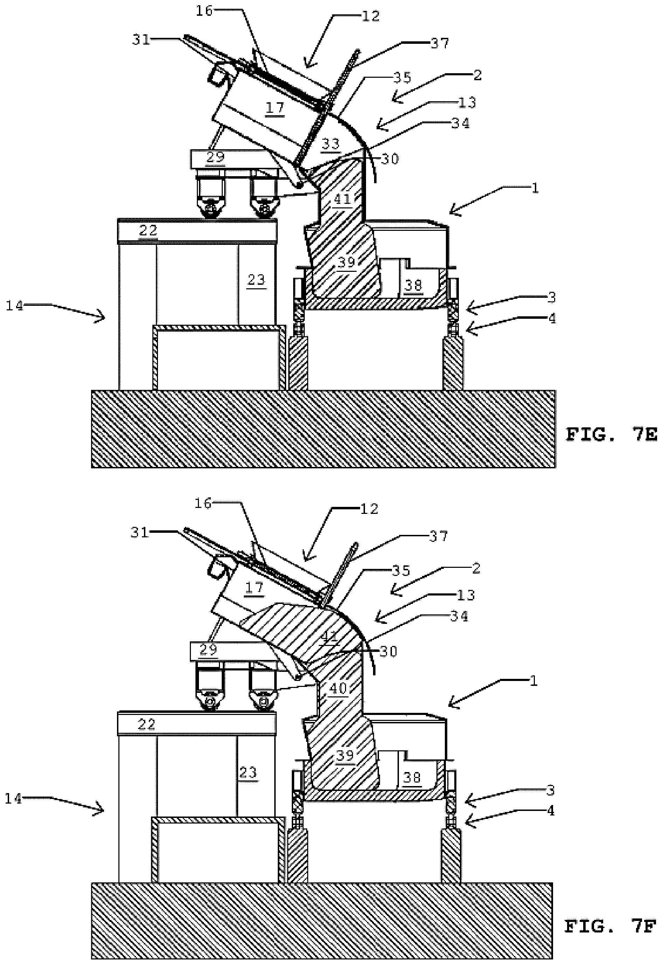

FIG. 7E zeigt eine zweite Schnittansicht der Schmelzvorrichtung gemäß der ersten Ausführungsform während des Schmelzzyklus, nachdem der Bunkerbehälter 17 nach vorne gekippt wurde (nach dem Schritt iv.) für die zweite Charge Stahlschrott 40. In dem Beschickungsschacht 13 hat sich eine Chargiergutsäule ausgebildet.

FIG. 7F zeigt eine sechste Schnittansicht der Schmelzvorrichtung gemäß der ersten Ausführungsform während des Schmelzzyklus während des Umkippens des Bunkerbehälters 17 aus seiner Ausgangslage (nach dem Schritt iv.) für eine dritte Charge Stahlschrott 41. Der zeitliche Abstand zwischen den Schritten iv.) und v.) kann von der Charge abhängen. Für die dritte Charge 41 ist der zeitliche Abstand zwischen den Schritten iv.) und v.) wesentlich länger als für die erste Charge Stahlschrott 39, da abgewartet werden muss, bis die Chargiergutsäule so weit abgeschmolzen ist, dass die Charge Stahlschrott 41 vollständig aus dem Bunkerbehälter 17 in den Beschickungsschacht 13 rutscht.

Die Schritte i.) bis iii.) können für die erste Charge, die zu einem nachfolgenden Schmelzzyklus gehört, durchgeführt werden, bevor der Abstich für den vorhergehenden Schmelzzyklus erfolgt ist. Dabei kann es vorkommen, dass etwas Stahlschrott, der zu der ersten Charge gehört, in den Beschickungsschacht 13 fällt. Dies stellt jedoch kein Problem dar. Der nachfolgende Schmelzzyklus folgt dabei direkt auf den vorhergehenden Schmelzzyklus und überlappt sogar mit diesem. Der Abstich und das Ablassen der Schlacke erfolgen vor dem Schritt iv.) für die erste Charge des nachfolgenden Schmelzzyklus.

In der folgenden Beschreibung weiterer Ausführungsformen der vorliegenden Erfindung werden als Bezugszeichen für funktionsgleiche Elemente die gleichen Zahlen wie für die erste Ausführungsform mit einem zusätzlichen nachgestellten Buchstaben verwendet.

Für die folgenden Ausführungsformen werden nur die Merkmale dargestellt, in denen diese wesentlich von der ersten Ausführungsform abweichen. Nicht beschriebene Elemente der weiteren Ausführungsformen sind also durch zumindest im Wesentlichen identische Elemente verwirklicht. Die Merkmale unterschiedlicher Ausführungsformen können miteinander kombiniert werden, soweit dies technisch möglich ist.

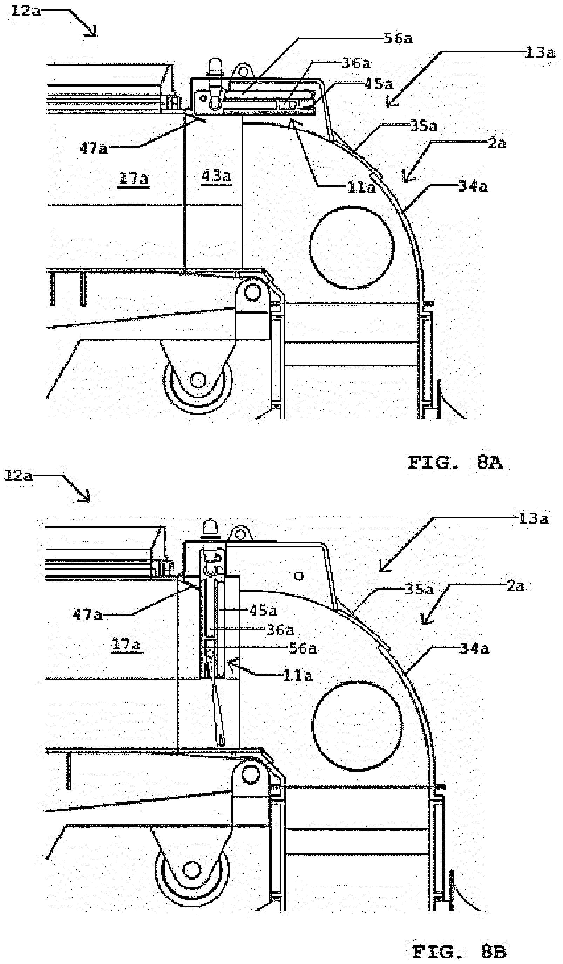

FIG. 8A zeigt eine erste Schnittansicht eines Beschickungsschachts 13a der Schmelzvorrichtung gemäß einer zweiten Ausführungsform. Der entsprechende Ausschnitt für die erste Ausführungsform ist FIG. 4B zu entnehmen. Statt eines Verschlusselements (37, siehe FIG. 7A) ist jedoch eine Ofengashemmeinrichtung 11a in einer Beschickungsöffnung 43a vorgesehen, die sich über die gesamte Breite der viereckigen Beschickungsöffnung 43a erstreckt. Die Ofengashemmeinrichtung 11a befindet sich in der hochgeklappten Position und umfasst eine Kühleinrichtung 30a, ein Gebläse 36a und eine Trennwand 45a, und ist um eine Schwenkachse mit Hilfe eines Antriebs (nicht gezeigt) schwenkbar, der mittels einer Steuerung (nicht gezeigt) gesteuert wird und die Ofengashemmeinrichtung 11a zwischen der hochgeklappten und einer heruntergeklappten Position verfahren kann. Vor der Ofengashemmeinrichtung 11a ist ein Prallschutz 47a vorgesehen, der eine schräge Aufprallfläche aufweist und die Ofengashemmeinrichtung 11a vor einer Beschädigung durch Chargiergut schützt, welches aus einem Bunkerbehälter 17a in einen Beschickungsschacht 13a rutscht.

FIG. 8B zeigt eine zweite Schnittansicht des Beschickungsschachts der Schmelzvorrichtung gemäß der zweiten Ausführungsform. Die Ofengashemmeinrichtung 11a ist mittels des Antriebs um die Schwenkachse nach unten geschwenkt und befindet sich in der heruntergeklappten Position. Aus Auslassöffnungen des Gebläses 36a strömt Luft. Die ausströmende Luft verhindert einen Luftstrom von einer Seite der Beschickungsöffnung 43a zu deren anderer Seite und somit, dass Ofengas aus dem Ofengasgefäß in den Bunkerbehälter 17a und von da weiter durch eine Ladeöffnung nach draußen strömt.

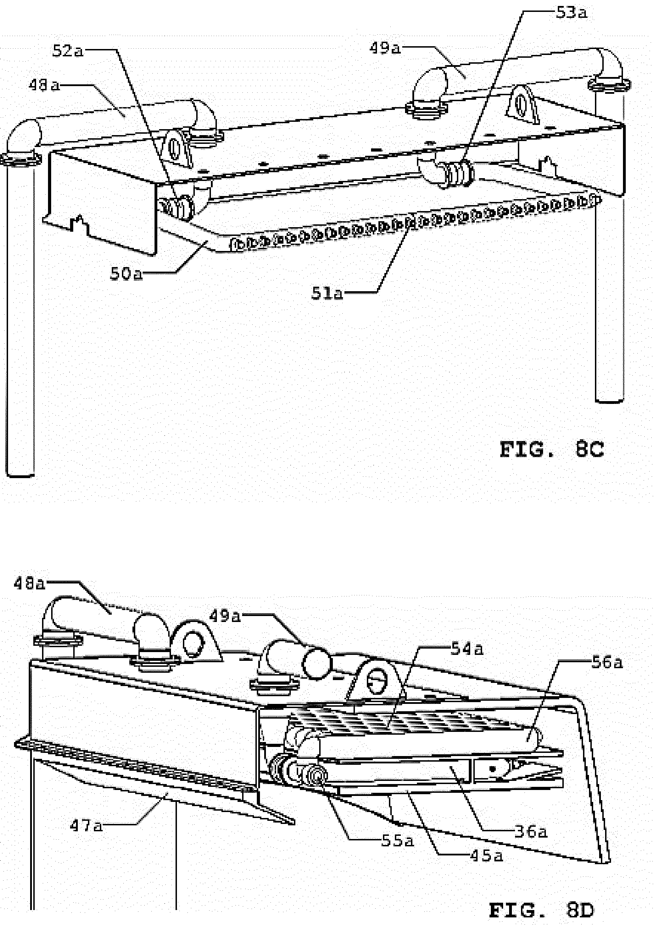

FIG. 8C zeigt eine Ansicht des Gebläses 36a der Schmelzvorrichtung gemäß der zweiten Ausführungsform. Das Gebläse 36a umfasst einen ersten Endrohrabschnitt 48a, einen zweiten Endrohrabschnitt 49a und einen zentralen Rohrabschnitt 50a. Der zentrale Rohrabschnitt 50a weist im Wesentlichen die Form eines Vierecks auf, das an einer Seite, die sich oben befindet, wenn die Ofengashemmeinrichtung 11a in der heruntergeklappten Position ist, und einen horizontalen Bereich, der sich unten befindet, wenn die Ofengashemmeinrichtung 11a in der heruntergeklappten Position ist. In dem horizontalen Bereich des zentralen Rohrabschnitts 50a sind mehrere Auslassöffnungen 51a ausgebildet, die nach unten gerichtet sind, wenn sich die Ofengashemmeinrichtung 11a in der heruntergeklappten Position befindet. Die beiden Enden des zentralen Rohrabschnitts 50a sind über zwei Rohrgelenke 52a, 53a mit den beiden Endrohrabschnitten 48a, 49a drehbar verbunden. Die Drehachsen der beiden Rohrgelenke 52a, 53a liegen beide in derselben horizontalen Achse. Da die beiden Endrohrabschnitte 48a, 49a fest mit dem Gehäuse des Beschickungsschachts 13a verbunden sind, bildet die Drehachse gleichzeitig die Schwenkachse, um welche die Ofengashemmeinrichtung 11a schwenkbar ist. In der heruntergeklappten Position wird Druckluft an den beiden Endrohrabschnitten 49a, 50a in das Gebläse gepresst. Die Druckluft strömt zu dem horizontalen Bereich des zentralen Rohrabschnitts 50a und entweicht über die Auslassöffnungen 51a nach unten.

FIG. 8D zeigt eine Ansicht einer Ofengashemmeinrichtung 11a der Schmelzvorrichtung gemäß der zweiten Ausführungsform. Die Kühleinrichtung 30a umfasst rohrförmige Kühllamellen 54a und ist an ihren gegenüberliegenden Enden durch zwei Rohrgelenke 55a mit einer Zuleitung (nicht gezeigt) und Ableitung (nicht gezeigt) für Kühlflüssigkeit verbunden, durch welche die Kühlflüssigkeit zu den Kühllamellen 54a zugeführt und von ihnen abgeführt wird. Die Drehachsen der beiden Rohrgelenke 55a der Kühleinrichtung 30a sind mit der Drehachse der beiden Rohrgelenke 52a, 53a der Ofengashemmeinrichtung 11a identisch. Wenn eine Ofengashemmeinrichtung 11a vorgesehen ist, wird ein Schmelzverfahren durchgeführt, welches abgesehen davon, dass der Schritt iii.) durch den Schritt iii.)' ersetzt ist und dass der Schritt vi.) durch den Schritt vi.)' ersetzt ist, mit demjenigen identisch ist, welches anhand der FIG. 7A bis FIG. 7F erläutert ist. Der Schritt iii.)' lautet Hochklappen der Ofengashemmeinrichtung 11a und Abschalten des Gebläses 36a, wobei nach dem Abschalten des Gebläses 36a das Ofengas aus dem Schmelzgefäßinnenraum durch die hintere Gasauslassöffnung an dem Bunkerbehälter abgezogen wird. Der Schritt vi.) lautet Herunterklappen der Ofengashemmeinrichtung 11a und Anschalten des Gebläses 36a, wobei nach dem Anschalten des Gebläses 36a das Ofengas aus dem Schmelzgefäßinnenraum durch die obere Gasauslassöffnung in dem Beschickungsschacht 13a abgezogen wird.

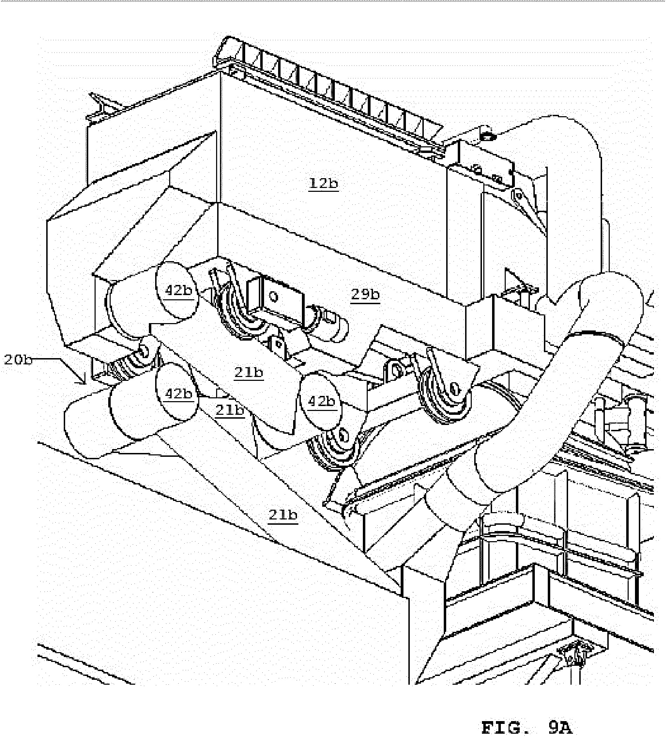

FIG. 9A zeigt eine Teilansicht einer Schmelzvorrichtung gemäß einer dritten Ausführungsform. Das Podest ist nicht dargestellt, um wesentliche Elemente nicht zu verdecken. Das Ofengas wird aus dem Bunker 12b durch eine Gasauslassöffnung an der hinteren Wand des Bunkers 12b über einen Gaskanal 20b mit mehreren Rohrabschnitten 21b abgesaugt, die durch Gelenkverbindungen 42b miteinander verbunden sind.

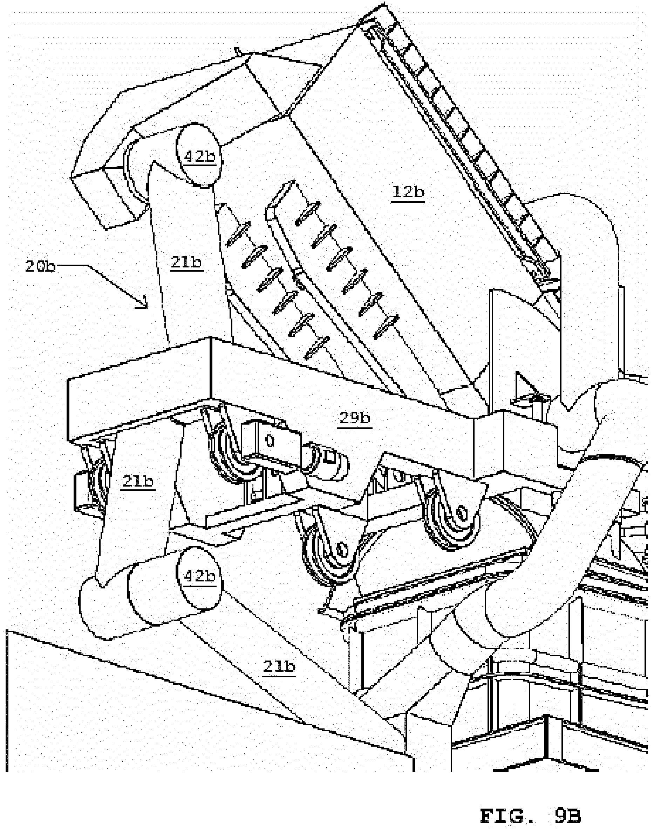

FIG. 9B zeigt eine Teilansicht der Schmelzvorrichtung gemäß der dritten Ausführungsform mit gekipptem Bunker 12b. Das Kippen des Bunkers 12b wird durch eine Verdrehung der Gelenkverbindungen 42b ermöglicht.

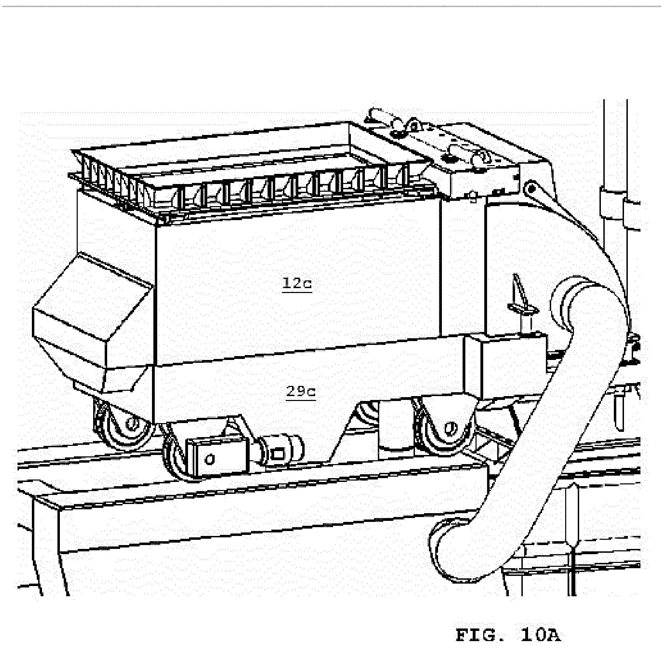

FIG. 10A zeigt eine Teilansicht einer Schmelzvorrichtung gemäß einer vierten Ausführungsform.

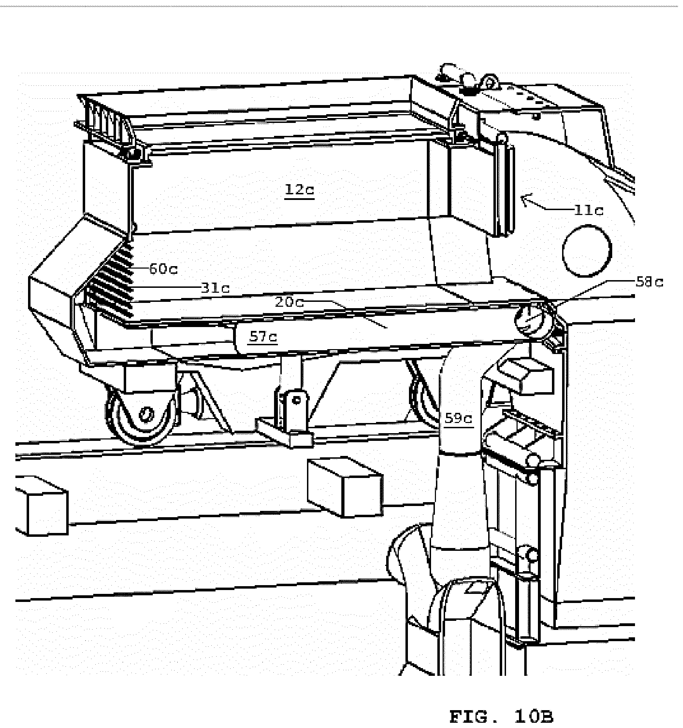

FIG. 10B zeigt eine Schnittansicht durch einen Bunker 12c der Schmelzvorrichtung gemäß der vierten Ausführungsform. Das Ofengas wird durch eine Gasauslassöffnung 31c an der hinteren Wand des Bunkers 12c über einen Gaskanal 20c abgesaugt. In der Gasauslassöffnung ist ein Gitter 60c vorgesehen. Ein erster Kanalabschnitt 57c des Gaskanals 20c verläuft zunächst unter dem Boden eines Bunkerbehälters 17c und mündet in einem Rohrgelenk 58c. Das Rohrgelenk 58c liegt in der Drehachse des Bunkerbehälters 12c, wenn dieser gekippt wird. Ein zweiter Kanalabschnitt 59c, durch den das Ofengas abgesaugt wird, beginnt in dem Rohgelenk 58c.

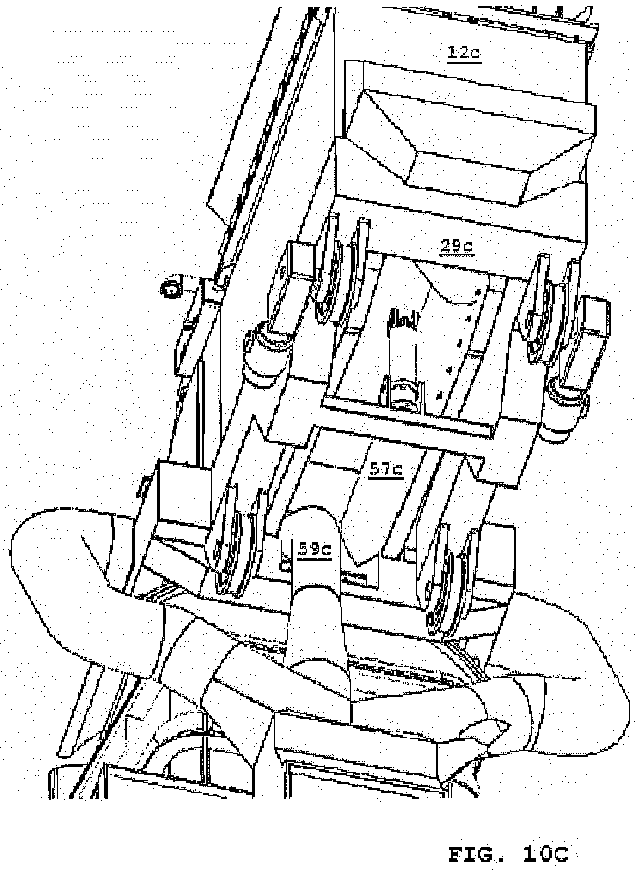

FIG. 10C zeigt eine Ansicht des Bunkers der Schmelzvorrichtung gemäß der vierten Ausführungsform von unten.

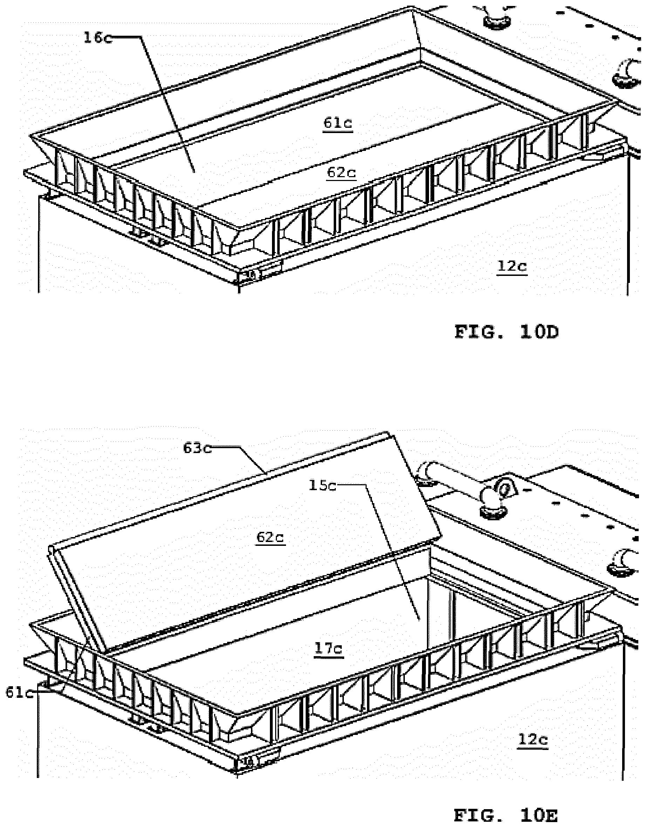

FIG. 10D zeigt eine Ansicht eines geschlossenen Verschlusselements 16c der Schmelzvorrichtung gemäß der vierten Ausführungsform.

Das Verschlusselement 16c umfasst eine erste Verschlussplatte 61c und eine zweite Verschlussplatte 62c.

FIG. 10E zeigt eine Ansicht des geöffneten Verschlusselements der Schmelzvorrichtung gemäß der vierten Ausführungsform. Die zwei Verschlussplatten 61c, 62c sind durch ein Scharnier 63c miteinander verbunden. Wenn die erste Verschlussplatte 61c von einem Antrieb (nicht gezeigt), der von einer Steuerung gesteuert wird, nach oben geschwenkt wird, wird die zweite Verschlussplatte 62c auf die erste Verschlussplatte 61c geklappt und eine Ladeöffnung 15c wird geöffnet.

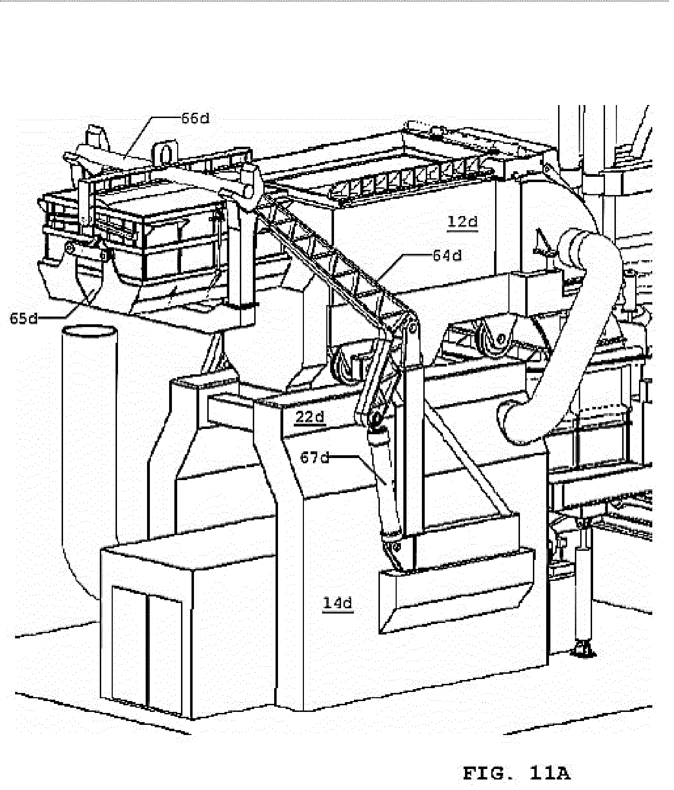

FIG. 11A zeigt eine Teilansicht einer Schmelzvorrichtung gemäß einer fünften Ausführungsform mit einer Schwenkeinrichtung für einen zusätzlichen Chargiergutbehälter 65d in einer Ladestellung. Die Schwenkeinrichtung umfasst zwei Tragarme 64d, die auf gegenüberliegenden Seiten eines Podests 14d angebracht sind. Die zwei Tragarme 64d werden durch Hydraulikzylinder 67d, die von einer Steuerung gesteuert werden, angetrieben. An den oberen Enden der Tragarme 64d ist jeweils eine Halterung für eine Tragachse 66d ausgebildet, welche den zusätzlichen Chargiergutbehälter 65d trägt. Die Tragachse 66d ist an ihren beiden gegenüberliegenden Enden jeweils in einer der Halterungen aufgenommen.

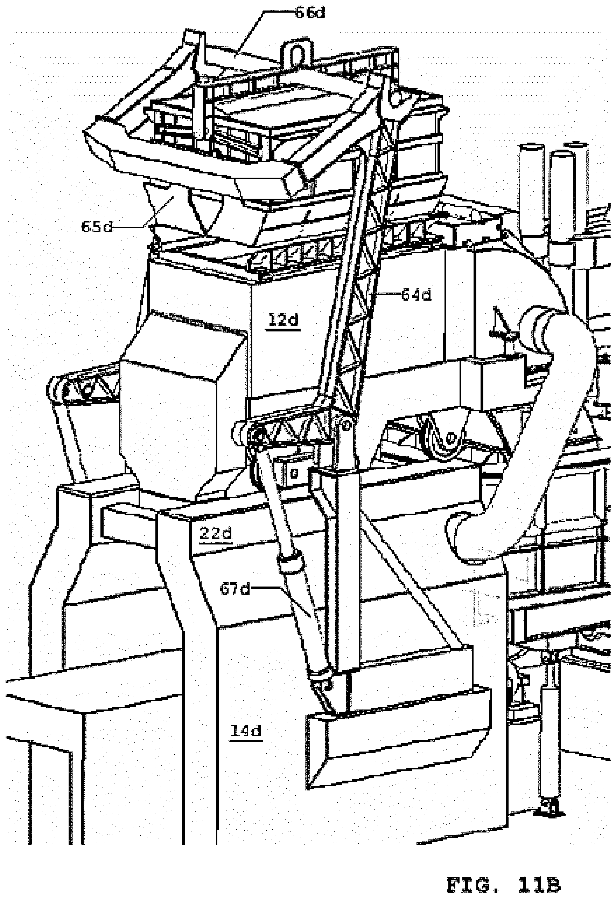

FIG. 11B zeigt eine Teilansicht der Schmelzvorrichtung gemäß der fünften Ausführungsform mit der Schwenkeinrichtung für den zusätzlichen Chargiergut-behälter 65d in einer Entladestellung. Die beiden Tragarme 64d sind mit Hilfe der Hydraulikzylinder 67d nach vorne geschwenkt, sodass der zusätzliche Chargiergutbehälter direkt über dem Bunker 12d angeordnet ist. Zum Entleeren des zusätzlichen Chargiergutbehälters 65d wird eine Öffnung in dessen Boden geöffnet.

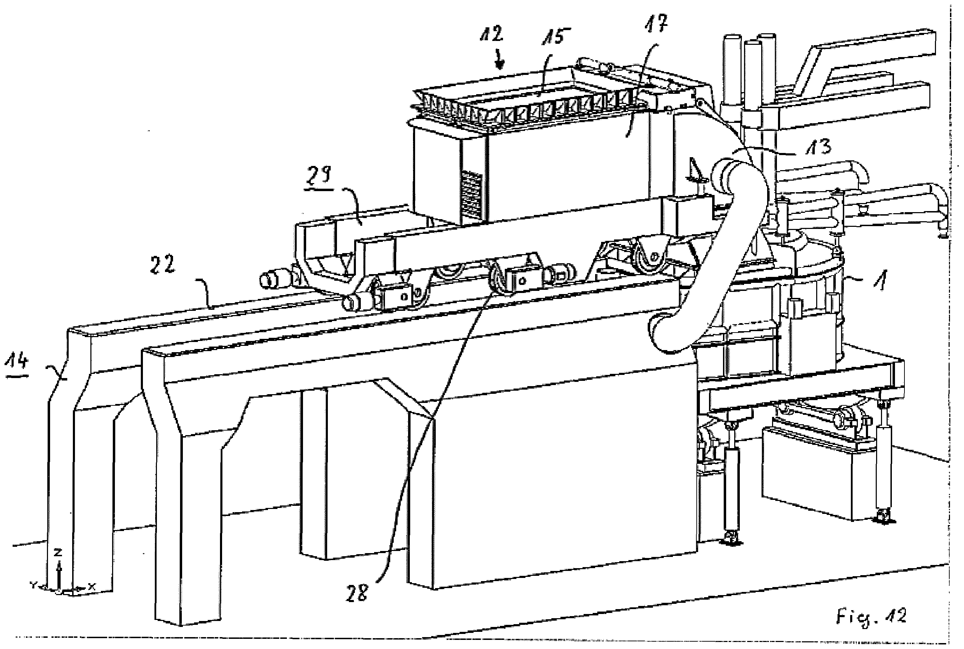

FIG. 12 zeigt die Schmelzvorrichtung in einer perspektivischen Ansicht. Bei dieser Ausführung ist dem Ofengefäß 1 ein Podest 14 zugeordnet. Das Podest 14 ist mit Schienen 22 bestückt, auf denen ein verfahrbarer Bunker 12 mit einem Bunkerbehälter 17 angeordnet ist. Dabei ist der Bunker 12 mit einem Fahrgestell 29 versehen, das mit Rollen 28 bestückt ist, die auf die Schienen 22 des Protestes 14 aufgestellt sind, so dass der Bunker 12 auf dem Podest 14 verfahrbar ist. In der dargestellten Position ist der Bunkerbehälter 17 an den Beschickungsschacht 13 angedockt und kann über eine hier nicht dargestellte Kippeinrichtung in die Beschickungsöffnung 43 des Beschickungsschachtes 13 entleert werden. Dies hat den Vorteil, dass der Bunkerbehälter 17 lediglich auf eine Höhe angehoben werden muss, so dass er auf das Fahrgestell 29 aufgesetzt werden kann. Hierdurch kann sowohl der Kran zum Aufsetzen des Bunkerbehälters 17, wie auch die Halle, in der die Schmelzvorrichtung angeordnet ist, in geringerer Höhe ausgebildet sein, als wenn der Bunkerbehälter 17 auf eine Höhe oberhalb des Beschickungsschachtes 13 angehoben werden müsste.

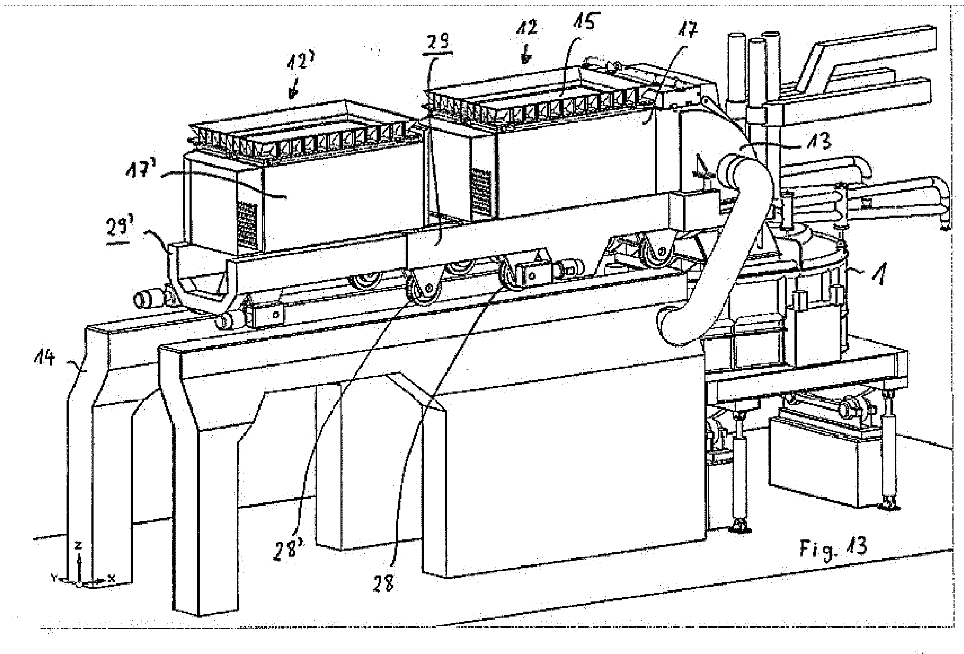

FIG. 13 zeigt eine Weiterbildung der Ausführung der Schmelzvorrichtung gemäß FIG. 12 dahingehend, dass auf das Podest 14 zusätzlich ein weiterer Bunker 12' aufgesetzt werden kann, sodass nach Entleerung des Bunkerbehälters 17 des Bunkers 12 dieser Bunker 12 mithilfe des erwähnten Krans von dem Podest 14 abgehoben werden kann und anschließend der nachgeführte Bunker 12' über die Schienen 22 des Podestes 14 an die Beschickungsöffnung des Beschickungsschachtes 13 herangeführt werden kann. Bei dieser Lösung ist eine kontinuierliche Beschickung des Beschickungsschachtes 13 sichergestellt, wobei die Vorteile, dass sowohl der Kran als auch die Halle, in der die Schmelzvorrichtung angeordnet ist in geringerer Höhe ausgeführt sein können erhalten bleiben.

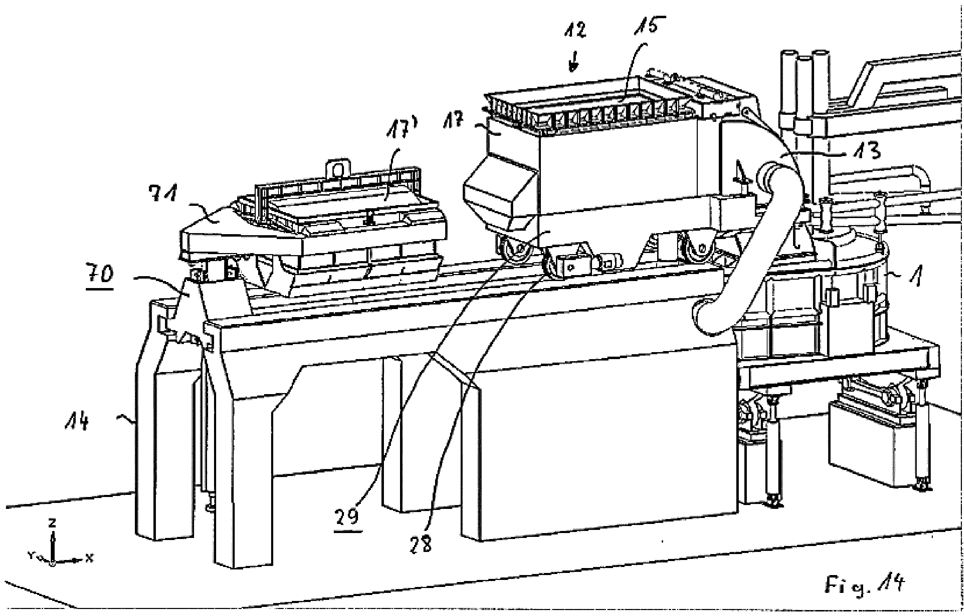

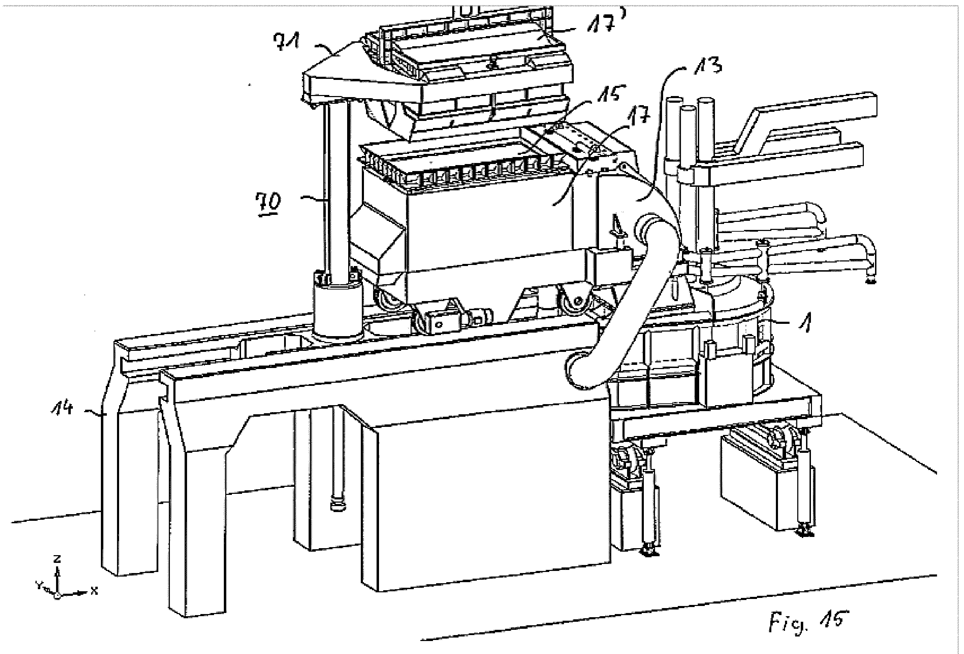

FIG. 14 zeigt eine Weiterbildung der erfindungsgemäßen Schmelzvorrichtung dahingehend, dass dem Podest 14 zusätzlich eine Hebevorrichtung 70 zugeordnet ist, wobei die Hebevorrichtung 70 mittels einer weiteren Schienenführung, die in das Podest integriert ist, ebenfalls entlang des Podestes 14 verfahrbar ist. Wie ebenfalls aus FIG. 14 ersichtlich, ist die Hebevorrichtung 70 mit einer Aufnahmevorrichtung 71 für einen weiteren Bunkerbehälter 17 versehen, der mittels der Hebevorrichtung 70' angehoben und anschließend in Richtung des bereits an den Beschickungsschacht 13 angedockten Bunkers 12 bewegbar ist, bis schließlich gemäß FIG. 15 der weitere Bunkerbehälter 17' oberhalb des bereits an den Beschickungsschacht 13 angedockten Bunkerbehälters 17 angeordnet ist und mittels einer Entleerungseröffnung 71 des Bunkerbehälters 17' in die Ladeöffnung 15 des Bunkerbehälters 17 entleerbar ist. Bei dieser Lösung muss nicht ein weiterer Bunker, sondern lediglich ein Bunkerbehälter 17' derart über das Podest 14 angehoben werden, dass dieser weitere Bunkerbehälter 17' von der Aufnahmevorrichtung 71 der Hebevorrichtung 70 aufgenommen werden kann, wobei dann die weitere Bewegung dieses nachgeführten Bunkerbehälters 17' mittels der Hebevorrichtung 70 umgesetzt wird. Auch hier bleiben die Vorteile einer geringeren Hallen- und Kranhöhe erhalten.

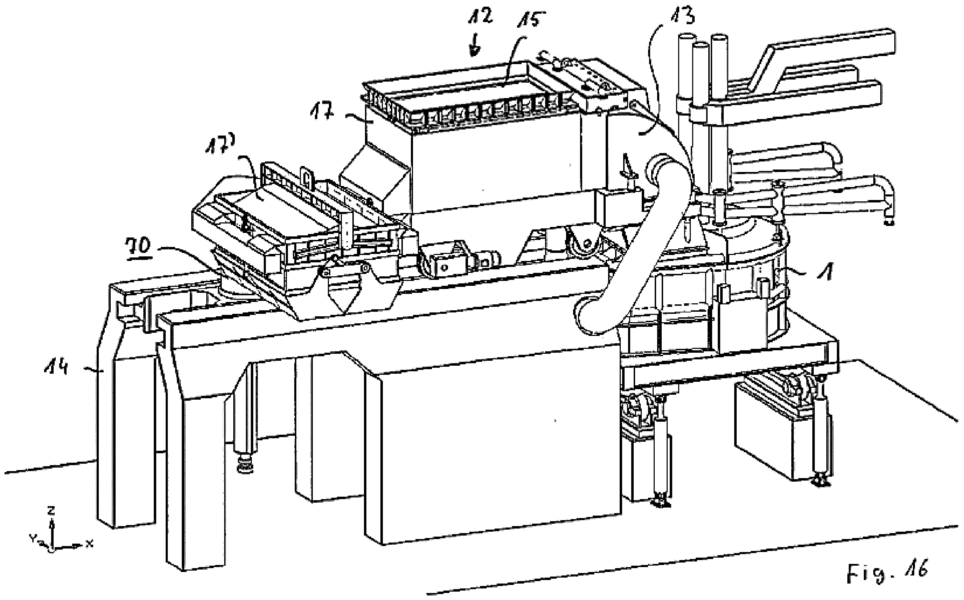

In einer weiter verbesserten Ausführung gemäß FIG. 16 ist die Hebevorrichtung 70 zusätzlich mit einer Schwenkvorrichtung derart versehen, dass der nachgeführte weitere Bunkerbehälters 70 auch quer, d.h. um 90° versetzt, zu der Ausrichtung des bereits an den Beschickungsschacht 13 herangeführten Bunkers 17 auf dem Podest 14 abgesetzt und mittels der Aufnahmevorrichtung 71 der Hebevorrichtung 70 aufnehmbar ist. Mittels der verschwenkbaren Hebevorrichtung 70 kann anschließend der nachgeführte weitere Bunkerbehälter 17' derart verschwenkt werden, dass er gemäß der Darstellung in FIG. 15 oberhalb der Ladeöffnung 15 des Bunkers 17 angeordnet wird und anschließend das in dem Bunkerbehälters 17 enthaltene Chargiergut in den Bunkerbehälters 17 des Bunkers 12 entleerbar ist. Der Vorteil dieser Lösung besteht neben den bereits genannten Vorteilen darin, dass bei dieser Ausführung aufgrund der Möglichkeit, den nachgeführten Bunkerbehälters 17' quer auf das Podest 14 aufzusetzen, das Podest 14 dementsprechend kürzer ausgeführt sein kann, so dass insoweit der Platzbedarf der erfindungsgemäßen Schmelzvorrichtung weiter verringert ist.

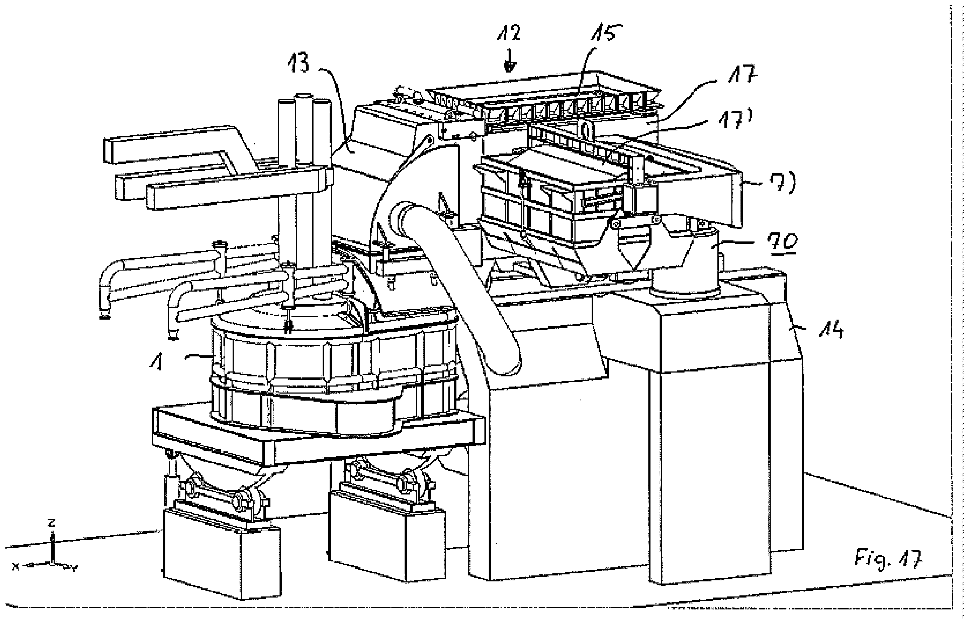

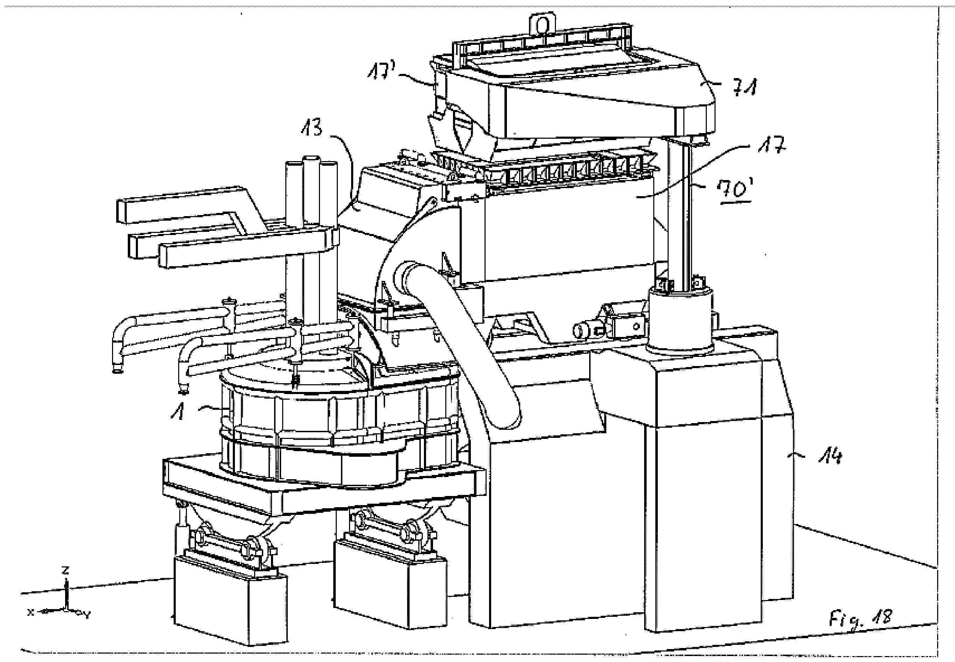

In einer abermals alternativen Ausgestaltung gemäß FIG. 17 kann die Hebevorrichtung 70 auch nicht in das Podest 14 integriert sein, sondern vielmehr separat seitlich neben dem Podest 14 angeordnet sein, sodass die Länge des Podestes 14 um den ansonsten bestehenden Platzbedarf für die Hebevorrichtung 70 verringert ist. Der Vorteil, den nachgeführten Bunkerbehälter 70' nur bis zur Höhe der Aufnahmevorrichtung 71 der Hebevorrichtung 70 anheben zu müssen, bevor der nachgeführte Bunkerbehälters 70 von der Aufnahmevorrichtung 71 der Hebevorrichtung 70 aufgenommen wird, bleibt in diesem Zusammenhang ebenfalls erhalten. Auch bei dieser Ausführung ist gemäß FIG. 18 die Hebevorrichtung 70 mit einem Schwenkmechanismus versehen, die es erlaubt, den um 90° versetzt in der Aufnahmevorrichtung 71 der Hebevorrichtung 70 aufgenommenen nachgeführten Bunkerbehälter 17' zunächst anzuheben und anschließend so zu verschwenken, dass der nachgeführte Bunkerbehälter 17' über der Ladeöffnung 15 des Bunkers 12 angeordnet ist, so dass der nachgeführte Bunkerbehälter 17' in den Bunkerbehälter 17 des Bunkers 12 entleerbar ist.

### BEZUGSZEICHENLISTE

- 1: Ofengefäß
- 2: Beschickungsvorrichtung
- 3: Halterung
- 4: Kippvorrichtung
- 5: Drehgelenk
- 5a: Kippachse
- 6: hydraulischer Zylinder
- 7: Schlackeauslass
- 8: Schlacketür
- 9: Schmelzeauslass
- 10: Ofengefäßdeckel
- 11: Ofengashemmeinrichtung
- 12, 12', 12a, 12b, 12c, 12d: Bunker
- 13, 13a: Beschickungsschacht
- 14, 14d: Podest
- 15, 15c: Ladeöffnung
- 16, 16c: Verschlusselement
- 17, 17', 17a, 17c: Bunkerbehälter
- 18: Kippeinrichtung
- 19: Zylinder
- 20, 20b, 20c: Gaskanal
- 21, 21b: Rohrabschnitt
- 22: Schienen
- 23: Pfeiler
- 24: Gasabzugeinrichtung
- 25: Gasauslassöffnung
- 26: Dichtungselement
- 27: weiteres Dichtungselement
- 28: Rollen
- 29: Fahrgestell
- 30, 30a: Kühleinrichtung
- 31, 31c: weitere Gasauslassöffnung
- 32: Ofengefäßöffnung ≈ Schmelzgefäßöffnung
- 33: Schachtanschlusselement
- 34: Oberteil des Beschickungsschachts (13)
- 35: Oberteil des Schachtanschlusselements (33)
- 36, 36a: Gebläse
- 37: Verschlusselement
- 38: Ofengefäßinnenraum ≈ Schmelzgefäßinnenraum
- 39: erste Charge Stahlschrott (Chargiergut)
- 40: zweite Charge Stahlschrott (Chargiergut)
- 41: dritte Charge Stahlschrott (Chargiergut)
- 42, 42b: Gelenkverbindung
- 43, 43a: Beschickungsöffnung
- 44: Schachtöffnung
- 45a: Trennwand
- 47a: Prallschutz
- 48, 48a: erster Endrohrabschnitt
- 49, 49a: zweiter Endrohrabschnitt
- 50, 50a: zentraler Rohrabschnitt
- 51, 51a: Auslassöffnungen
- 52, 52a: Rohrgelenke
- 53, 53a: weitere Rohrgelenke
- 54, 54a: Kühllamellen
- 55, 55a: Rohrgelenke der Kühleinrichtung (30, 30a)

- 57c: erster Kanalabschnitt
- 58c: Rohrgelenk
- 59c: zweiter Kanalabschnitt
- 60c: Gitter
- 61c: erste Verschlussplatte
- 62c: zweite Verschlussplatte
- 63c: Scharnier
- 64d: Tragarme
- 65d: zusätzlicher Chargiergutbehälter
- 66d: Tragachse
- 67d: Hydraulikzylinder
- 68: Drehgelenk

- 70, 70': Hebevorrichtung
- 71: Aufnahmevorrichtung

## Patentansprüche

1. Schmelzvorrichtung mit einem Beschickungsschacht (13, 13a) und einer Kippvorrichtung (4), durch die ein Ofengefäß (1) mit einem Ofengefäßdeckel (10) in unterschiedliche Kipppositionen um eine Kippachse (5a) kippbar ist, bei der der Ofengefäßdeckel (10) eine Chargieröffnung (32), an die sich beidseitig je ein flächiges Dichtungselement (26) anschließt, sodass die Außenbegrenzung dieser Dichtungselemente (26) und die Außenbegrenzung der Chargieröffnung (32) einen Ofengefäßdichtungsbereich mit einer Dichtungsfläche definiert, der die Chargieröffnung (32) umgibt, **dadurch gekennzeichnet,**
**dass** dieser Ofengefäßdichtungsbereich als konvexe, zylindermantelabschnittsförmige Fläche ausgebildet ist, und
**dass** an die der Chargieröffnung (32) zugewandten Öffnung des Beschickungsschachtes (13, 13a) beidseitig ebenfalls je ein weiteres Dichtungselement (27) derart angeschlossen ist, dass die Außenbegrenzung dieser weiteren Dichtungselemente (27) und die Außenbegrenzung dieser Öffnung des Beschickungsschachtes (13, 13a) einen Schachtdichtungsbereich mit einer komplementären konkaven, zylindermantelabschnittsförmigen Dichtungsfläche definiert, wobei Abschnitte der Dichtungsflächen der beiden Dichtungsbereiche in den unterschiedlichen Kipppositionen der Kippvorrichtung (4) einander jeweils gegenüber liegen.

2. Schmelzvorrichtung nach Anspruch 1, **dadurch gekennzeichnet, dass** der Ofengefäßdichtungsbereich und der Schachtdichtungsbereich jeweils Abschnitte von Kreiszylindermantelflächen bilden, und die Kreiszylinderachsen dieser Mantelflächen mit einer Kippachse (5a) der Kippvorrichtung (4) übereinstimmen.

3. Schmelzvorrichtung nach Anspruch 1 oder Anspruch 2, **dadurch gekennzeichnet, dass** ein dem Beschickungsschacht (13, 13a) vorangestellter Chargiergutbunker (12) eine Beschickungsöffnung (43) mit einem Beschickungsöffnungsverschlusselement (37) und eine Ladeöffnung (15) mit einem Ladeöffnungsverschlusselement (16) aufweist.

4. Schmelzvorrichtung nach einem der vorhergehenden Ansprüche, **dadurch gekennzeichnet, dass** der Beschickungsschacht (13) eine Gausauslassöffnung (25) aufweist.

5. Schmelzvorrichtung nach einem der vorhergehenden Ansprüche, **dadurch gekennzeichnet, dass** der Chargiergutbunker (12, 12c) eine weitere Gausauslassöffnung (31, 31c) aufweist.

6. Schmelzvorrichtung nach Anspruch 5, **dadurch gekennzeichnet, dass** ein Gaskanal (20c) in der Gasauslassöffnung (31c) mündet, dass der Gaskanal (20c) einen Kanalabschnitt (57c) aufweist, der unter einem Boden eines Bunkerbehälters (17c) des Chargiergutbunkers (12c) zu einem Rohrgelenk (58c) verläuft, das in einer Drehachse des Bunkerbehälters (17c) liegt.

7. Schmelzvorrichtung nach einem der vorhergehenden Ansprüche, **dadurch gekennzeichnet, dass** eine schwenkbare Ofengashemmeinrichtung (11a) mit einem Gebläse (36a) vorgesehen ist, wobei die Ofengashemmeinrichtung (11a) vorzugsweise in dem Beschickungsschacht (13a) vorgesehen ist.

8. Schmelzvorrichtung nach einem der vorhergehenden Ansprüche, **dadurch gekennzeichnet, dass** eine Schwenkeinrichtung für einen zusätzlichen Chargiergutbehälter (65d) vorgesehen ist, um den zusätzlichen Chargiergutbehälter (65d) von einer Ladestellung zu einer Entladestellung zu schwenken und umgekehrt, und dass die Schwenkeinrichtung zwei Tragarme (64d), je ein Tragarm auf je einer gegenüberliegenden Seite des Chargiergutbehälters (65d), aufweist, um den zusätzlichen Chargiergutbehälter (65d) auf den zwei gegenüberliegenden Seiten des Chargiergutbehälters (65d) zu haltern.

9. Schmelzvorrichtung nach einem oder mehreren der vorhergehenden Ansprüche, **dadurch gekennzeichnet, dass** die Schmelzvorrichtung eine Beschickungsvorrichtung (2) mit wenigstens einem Bunker (12), einem Beschickungsschacht (13) und einem Podest (14) umfasst, wobei der wenigstens eine Bunker (12), jeweils einen Bunkerbehälter (17) ein Fahrgestell (29) mit Rollen (28) und eine Kippeinrichtung (18) umfasst, wobei der wenigstens eine Bunker (12) mittels der Kippvorrichtung (18) derart kippbar ist, dass durch eine dem Beschickungsschacht (13) zugewandte Beschickungsöffnung (43, 43 a), die mittels eines Veschlusselementes (37) verschließbar ist, Chargiergut in den Beschickungsschacht (13) einfüllbar ist.

10. Schmelzvorrichtung nach Anspruch 9, **dadurch gekennzeichnet, dass** auf dem Podest (14) wenigstens ein weiterer Bunker (12") anzuordnen ist, dessen Bunkerbehälter (17') nach der Entleerung des Bunkerbehälters (17) des Bunkers (12) in den Beschickungsschacht (13) mittels eines Krans gegen den Bunkerbehälter (17) des Bunkers (12) austauschbar ist.

11. Schmelzvorrichtung nach Anspruch 9 oder 10, **dadurch gekennzeichnet, dass** dem Podest (14) eine auf dem Podest verfahrbare Hebevorrichtung für einen weiteren Bunkerbehälter (17') derart zugeordnet ist, dass mittels dieser Hebevorrichtung der weitere Bunkerbehälter (17') über eine verschließbare Ladeöffnung (15, 15c) des Bunkerbehälter (17) nach dessen Entleerung in den Beschickungsschacht (13) anhebbar ist und dieser weitere Bunkerbehälter (17') in die geöffnete Ladeöffnung (15, 15c) des Bunkerbehälters (17) entleerbar ist, wobei der weitere Bunkerbehälter (17') mittels des Krans in die Hebevorrichtung einsetzbar und wieder aus der Hebevorrichtung entnehmbar ist.

12. Schmelzvorrichtung nach einem der Ansprüche 9 bis 11, **dadurch gekennzeichnet, dass** der weitere Bunkerbehälter (17') mittels der Hebevorrichtung verschwenkbar ist, wobei die Hebevorrichtung vorzugsweise seitlich neben dem Podest (14) angeordnet ist.

13. Schmelzvorrichtung nach Anspruch 1 mit einem Ofengefäß (1) und einer Beschickungsvorrichtung (2), wobei die Beschickungsvorrichtung (2) einen Chargiergutschacht (13) und einen Chargiergutbunker (12) aufweist, wobei der Chargiergutschacht (13) als Chargiergutvorwärmeeinrichtung ausgebildet ist und diese Chargiergutvorwärmeeinrichtung eingerichtet ist, Chargiergut (39, 40, 41) in dem Beschickungsschacht (13) durch Ofengas vorzuwärmen,
**dadurch gekennzeichnet, dass** der Chargiergutbunker (12) als eine weitere Chargiergutvorwärmeeinrichtung ausgebildet ist, und dass diese weitere Chargiergutvorwärmeeinrichtung eingerichtet ist, Chargiergut (39, 40, 41) in dem Chargiergutbunker durch Ofengas vorzuwärmen.

14. Schmelzverfahren, welches durch eine Schmelzvorrichtung gemäss einem der vorhergehenden Ansprüche mit einem Ofengefäß (1) und einer Beschickungsvorrichtung (2) durchgeführt wird, wobei die Beschickungsvorrichtung (2) den Beschickungsschacht (13, 13a) und einen Chargiergutbunker (12) mit einem Bunkerbehälter (17, 17a) aufweist, mit folgenden Schritten:
Vorwärmen des Chargierguts (39, 40, 41) in dem Bunkerbehälter (17) durch Ofengas, und
Weiterbefördern des Chargierguts (39, 40, 41) von dem Bunkerbehälter (17, 17a) in den Beschickungsschacht (13),
Vorwärmen des Chargierguts (39, 40, 41) in dem Beschickungsschacht (13) durch Ofengas,
wobei das Schmelzverfahren mehrere Chargen Chargiergut umfasst, wobei für eine der mehreren Chargen Chargiergut die folgenden Schritte hintereinander durchgeführt werden:
Einfüllen der Charge in den Bunkerbehälter (17) durch eine Ladeöffnung (15);
Verschließen der Ladeöffnung (15);
Öffnen der Beschickungsöffnung (43);
Vorwärmen der Charge in dem Bunkerbehälter (17) durch Ofengas;
Weiterbeförderung der Charge von dem Bunkerbehälter in den Beschickungsschacht (13); und
Vorwärmen der Charge in dem Beschickungsschacht (13) durch Ofengas.

15. Schmelzverfahren nach Anspruch 14, **dadurch gekennzeichnet, dass** das Schmelzverfahren mehrere Chargen Chargiergut umfasst, wobei für eine der mehreren Chargen Chargiergut die folgenden Schritte hintereinander durchgeführt werden:
Einfüllen der Charge in den Bunkerbehälter (17a) durch eine Ladeöffnung, während der Eintritt von Ofengas in den Bunkerbehälter durch eine Ofengashemmeinrichtung (13a) gehemmt wird;
Verschließen der Ladeöffnung (15);
Vorwärmen der Charge in dem Bunkerbehälter (17a) durch Ofengas;
Weiterbeförderung der Charge von dem Bunkerbehälter in den Beschickungsschacht (13a); und
Vorwärmen der Charge in dem Beschickungsschacht (13a) durch Ofengas.

## Claims

1. A melting device having a feed shaft (13, 13a) and a tilting device (4), by means of which a furnace vessel (1) with a furnace vessel cover (10) is tiltable about a tilt axis (5a) into different tilt positions, where the furnace vessel cover (10) has a charging opening (32), to which a flat sealing element (26) is connected on each of two sides, such that the outside boundary of said sealing elements (26) and the outside boundary of the charging opening (32) define a furnace vessel sealing region with a sealing surface which surrounds the charging opening (32),
**characterized in that** said furnace vessel sealing region is realized as a convex, cylinder-surface-portion-shaped surface, and
**in that** a further sealing element (27) is also connected on each of two sides of the opening of the feed shaft (13, 13a) facing the charging opening (32) in such a manner that the outside boundary of said further sealing elements (27) and the outside boundary of said opening of the feed shaft (13, 13a) define a shaft sealing region with a complementary concave, cylinder-surface-portion-shaped sealing surface, wherein portions of the sealing surfaces of the two sealing regions are located opposite one another in each case in the different tilt positions of the tilting device (4).

2. The melting device as claimed in claim 1, **characterized in that** the furnace vessel sealing region and the shaft sealing region form in each case portions of circular cylinder surfaces, and the circular cylinder axes of said surfaces coincide with a tilt axis (5a) of the tilting device (4).

3. The melting device as claimed in claim 1 or claim 2, **characterized in that** a charging material bunker (12), which is arranged upstream of the feed shaft (13, 13a), comprises a feed opening (43) with a feed opening closure element (37) and a loading opening (15) with a loading opening closure element (16).

4. The melting device as claimed in one of the preceding claims, **characterized in that** the feed shaft (13) comprises a gas outlet opening (25).

5. The melting device as claimed in one of the preceding claims, **characterized in that** the charging material bunker (12, 12c) comprises a further gas outlet opening (31, 31c).

6. The melting device as claimed in claim 5, **characterized in that** a gas channel (20c) opens out in the gas outlet opening (31c), **in that** the gas channel (20c) comprises a channel portion (57c) which runs beneath a floor of a bunker container (17c) of the charging material bunker (12c) to a pipe joint (58c) which lies in a rotational axis of the bunker container (17c).

7. The melting device as claimed in one of the preceding claims, **characterized in that** a pivotable furnace gas inhibiting device (11a) is provided with a blower (36a),
wherein the furnace gas inhibiting device (11a) is preferably provided in the feed shaft (13a).

8. The melting device as claimed in one of the preceding claims, **characterized in that** a pivoting device is provided for an additional charging material container (65d) in order to pivot the additional charging material container (65d) from a loading position to an unloading position and vice versa, and **in that** the pivoting device comprises two support arms (64d), one support arm each on each oppositely situated side of the charging material container (65d) in order to support the additional charging material container (65d) on the two oppositely situated sides of the charging material container (65d).

9. The melting device as claimed in one or several of the preceding claims, **characterized in that** the melting device includes a feed device (2) with at least one bunker (12), a feed shaft (13) and a platform (14), wherein the at least one bunker (12) includes in each case a bunker container (17), a carriage (29) with rollers (28) and a tilting device (18), wherein the at least one bunker (12) is tiltable by means of the tilting device (18) in such a manner that charging material is tillable into the feed shaft (13) through a feed opening (43, 43a) which faces the feed shaft (13) and is closable by means of a closure element (37).

10. The melting device as claimed in claim 9, **characterized in that** at least one further bunker (12") is to be arranged on the platform (14) and the bunker container (17') of said further bunker is interchangeable by means of a crane for the bunker container (17) of the bunker (12) once the bunker container (17) of the bunker (12) has been emptied into the feed shaft (13).

11. The melting device as claimed in claim 9 or 10, **characterized in that** a lifting device for a further bunker container (17'), which lifting device is drivable on the platform (14), is associated with the platform in such a manner that by means of said lifting device, the further bunker container (17') is raisable above a closable loading opening (15, 15c) of the bunker container (17) once said bunker container has been emptied into the feed shaft (13) and said further bunker container (17') can be emptied into the open loading opening (15, 15c) of the bunker container (17), wherein the further bunker container (17') is insertable into the lifting device and is removable out of the lifting device again by means of the crane.

12. The melting device as claimed in one of claims 9 to 11, **characterized in that** the further bunker container (17') is pivotable by means of the lifting device, wherein the lifting device is preferably arranged to the side next to the platform (14).

13. The melting device as claimed in claim 1 having a furnace vessel (1) and a feed device (2), wherein the feed device (2) comprises a charging material shaft (13) and a charging material bunker (12), wherein the charging material shaft (13) is realized as a charging material pre-heating device and said charging material pre-heating device is set up to pre-heat charging material (39, 40, 41) in the feed shaft (13) by means of furnace gas, **characterized in that** the charging material bunker (12) is realized as a further charging material pre-heating device, and **in that** said further charging material pre-heating device is set up to pre-heat charging material (39, 40, 41) in the charging material bunker by means of furnace gas.

14. A melting method which is carried out by a melting device according to any one of the preceding claims with a furnace vessel (1) and a feed device (2), wherein the feed device (2) comprises the feed shaft (13, 13a) and a charging material bunker (12) having a bunker container (17, 17a), said method having the following steps:
pre-heat the charging material (39, 40, 41) in the bunker container (17) by means of furnace gas, and
forward the charging material (39, 40, 41) from the bunker container (17, 17a) into the feed shaft (13),
pre-heat the charging material (39, 40, 41) in the feed shaft (13) by means of furnace gas,
wherein the melting method includes several charges of charging material,
wherein for one of the several charges of charging material the following steps are carried out one after another:
pour the charge into the bunker container (17) through a loading opening (15);
close the loading opening (15);
open the feed opening (43);
pre-heat the charge in the bunker container (17) by means of furnace gas;
forward the charge from the bunker container into the feed shaft (13); and
pre-heat the charge in the feed shaft (13) by means of furnace gas.

15. The melting method as claimed in claim 14, **characterized in that** the melting method includes several charges of charging material, wherein for one of the several charges of charging material the following steps are carried out one after another:
pour the charge into the bunker container (17a) through a loading opening whilst the entry of furnace gas into the bunker container is inhibited by a furnace gas inhibiting device (13a);
close the loading opening (15);
pre-heat the charge in the bunker container (17a) by means of furnace gas;
forward the charge from the bunker container into the feed shaft (13a); and
pre-heat the charge in the feed shaft (13a) by means of furnace gas.

## Revendications

1. Dispositif de fusion avec un puits de chargement (13, 13a) et un dispositif de basculement (4), au moyen duquel une cuve de four (1) avec un couvercle de cuve de four (10) peut être basculée dans différentes positions de basculement autour d'un axe de basculement (5a), dans lequel le couvercle de cuve de four (10) présente une ouverture de chargement (32), à laquelle se raccorde de chaque côté un élément d'étanchéité plat (26), de sorte que la limite extérieure de ces éléments d'étanchéité (26) et la limite extérieure de l'ouverture de chargement (32) définissent une zone d'étanchéité de la cuve de four avec une surface d'étanchéité, qui entoure l'ouverture de chargement (32), **caractérisé**
**en ce que** cette zone d'étanchéité de la cuve de four est formée en tant que surface convexe, de section d'enveloppe cylindrique, et
**en ce qu'**un autre élément d'étanchéité (27) est également relié de chaque côté à l'ouverture du puits de chargement (13, 13a) tournée vers l'ouverture de chargement (32), de telle sorte que la limite extérieure de ces autres éléments d'étanchéité (27) et la limite extérieure de cette ouverture du puits de chargement (13, 13a) définissent une zone d'étanchéité de puits avec une surface d'étanchéité concave complémentaire sous la forme d'une section d'enveloppe cylindrique, où des sections des surfaces d'étanchéité des deux zones d'étanchéité sont opposées l'une à l'autre dans les différentes positions de basculement du dispositif de basculement (4).

2. Dispositif de fusion selon la revendication 1, **caractérisé en ce que** la zone d'étanchéité de la cuve de four et la zone d'étanchéité de puits forment chacune des sections de surfaces d'enveloppe cylindriques circulaires, et **en ce que** les axes des cylindres circulaires de ces surfaces d'enveloppe coïncident avec un axe de basculement (5a) du dispositif de basculement (4).

3. Dispositif de fusion selon la revendication 1 ou la revendication 2, **caractérisé en ce qu'**une soute de chargement (12) placée devant le puits de chargement (13, 13a) présente une ouverture de chargement (43) avec un élément de fermeture d'ouverture de chargement (37) et une ouverture de chargement (15) avec un élément de fermeture d'ouverture de chargement (16).

4. Dispositif de fusion selon l'une des revendications précédentes, **caractérisé en ce que** le puits de chargement (13) présente une ouverture de sortie de gaz (25).

5. Dispositif de fusion selon l'une des revendications précédentes, **caractérisé en ce que** la soute de chargement (12, 12c) possède une autre ouverture de sortie de gaz (31, 31c).

6. Dispositif de fusion selon la revendication 5, **caractérisé en ce qu'**un canal de gaz (20c) débouche dans l'ouverture de sortie de gaz (31c), **en ce que** le canal de gaz (20c) présente un tronçon de canal (57c) qui s'étend sous un fond d'un conteneur de soute (17c) de la soute de matériau de chargement (12c) jusqu'à un raccord de tuyau (58c) qui se trouve dans un axe de rotation du conteneur de soute (17c).

7. Dispositif de fusion selon l'une des revendications précédentes, **caractérisé en ce qu'**il est prévu un dispositif pivotant d'inhibition des gaz de four (11a) avec un souffleur (36a), le dispositif d'inhibition des gaz de four (11a) étant prévu de préférence dans le puits de chargement (13a).

8. Dispositif de fusion selon l'une des revendications précédentes, **caractérisé en ce qu'**il est prévu un dispositif de pivotement pour un conteneur de matériau de chargement supplémentaire (65d) pour faire pivoter le conteneur de matériau de chargement supplémentaire (65d) d'une position de chargement à une position de déchargement et inversement, et **en ce que** le dispositif de pivotement comprend deux bras de support (64d), un bras de support de chaque côté opposé du conteneur de matériau de chargement (65d), afin de maintenir le conteneur de matériau de chargement supplémentaire (65d) sur les deux côtés opposés du conteneur de matériau de chargement (65d).

9. Dispositif de fusion selon une ou plusieurs des revendications précédentes, **caractérisé en ce que** le dispositif de fusion comprend un dispositif de chargement (2) avec au moins une soute (12), un puits de chargement (13) et une plate-forme (14), dans lequel la au moins une soute (12) comprend chacun un conteneur de soute (17), un châssis (29) avec des rouleaux (28) et un dispositif de basculement (18), dans lequel le au moins un bunker (12) peut être basculé au moyen du dispositif de basculement (18) de telle sorte que le matériau de chargement puisse être introduit dans le puits de chargement (13) par une ouverture de chargement (43, 43a) tournée vers le puits de chargement (13), laquelle ouverture peut être fermée au moyen d'un élément de fermeture (37)

10. Dispositif de fusion selon la revendication 9, **caractérisé en ce qu'**au moins une autre soute (12") doit être disposée sur la plate-forme (14), dont le conteneur de soute (17') peut être remplacé par le conteneur de soute (17) de la soute (12) au moyen d'une grue après avoir vidé le conteneur de soute (17) de la soute (12) dans le puits de chargement (13).

11. Dispositif de fusion selon la revendication 9 ou 10, **caractérisé en ce qu'**un dispositif de levage pour un autre conteneur de soute (17'), lequel dispositif de levage pouvant être déplacé sur la plate-forme (14), est associé à ladite plate-forme (14) de telle sorte que, au moyen de ce dispositif de levage, l'autre conteneur de soute (17'), après avoir été vidé, peut être soulevé dans le puits de chargement (13) au moyen d'une grue par l'intermédiaire d'une ouverture de chargement (15, 15c) pouvant être fermée, et **en ce que** ledit autre conteneur de soute (17') peut être vidé dans l'ouverture de chargement ouverte (15, 15c) du conteneur de soute (17), l'autre conteneur de soute (17') pouvant être inséré dans le dispositif de levage au moyen de la grue et pouvant également être retiré du dispositif de levage.

12. Dispositif de fusion selon l'une des revendications 9 à 11, **caractérisé en ce que** l'autre soute (17') peut pivoter au moyen du dispositif de levage, le dispositif de levage étant de préférence disposé latéralement à côté de la plate-forme (14).

13. Dispositif de fusion selon la revendication 1 avec une cuve de four (1) et un dispositif de chargement (2), dans lequel le dispositif de chargement (2) comprend un puits de matériau de chargement (13) et une soute de matériau de chargement (12), dans lequel le puits de matériau de chargement (13) est conçu comme un dispositif de préchauffage de matériau de chargement et ce dispositif de préchauffage de matériau de chargement est agencé pour préchauffer le matériau de chargement (39, 40, 41) dans le puits de chargement (13) par le gaz de four,
**caractérisé en ce que** la soute de matériau de chargement (12) est construite comme un autre dispositif de préchauffage de matériau de chargement, et **en ce que** cet autre dispositif de préchauffage de matériau de chargement est agencé pour préchauffer le matériau de chargement (39, 40, 41) dans la soute de matériau de chargement au moyen de gaz de four.

14. Procédé de fusion, qui est réalisé par un dispositif de fusion selon l'une des revendications précédentes avec une cuve de four (1) et un dispositif de chargement (2), le dispositif de chargement (2) comprenant le puits de chargement (13, 13a) et une soute de matériau de chargement (12) avec un conteneur de soute (17, 17a), comprenant les étapes suivantes :
le préchauffage du matériau de chargement (39, 40, 41) dans le conteneur de soute (17) par du gaz de four, et
le transport ultérieur du matériau de chargement (39, 40, 41) du conteneur de soute (17, 17a) dans la goulotte de chargement (13),
le préchauffage du matériau de chargement (39, 40, 41) dans le puits de chargement (13) par le gaz de four,
dans lequel le procédé de fusion comprend une pluralité de lots de matériau de charge, dans lequel pour l'un de la pluralité de lots de matériau de charge, les étapes suivantes sont effectuées en séquence :
le remplissage du lot dans le conteneur de soute (17) par une ouverture de chargement (15) ;
la fermeture de l'ouverture de chargement (15) ;
l'ouverture de l'orifice de chargement (43) ;
le préchauffage de la charge dans le conteneur de soute (17) par du gaz de four ;
la poursuite du transport de la charge du conteneur de soute dans le puits de chargement (13) ; et
le préchauffage de la charge dans le puits de chargement (13) par du gaz de four.

15. Procédé de fusion selon la revendication 14, **caractérisé en ce que** le procédé de fusion comprend plusieurs lots de matériau de charge, dans lequel, pour l'un des plusieurs lots de matériau de charge, les étapes suivantes sont effectuées en séquence:
le chargement de la charge dans le conteneur de soute (17a) par une ouverture de chargement, tandis que l'entrée du gaz de four dans le conteneur de soute est inhibée par un inhibiteur de gaz de four (13a) ;
la fermeture de l'ouverture de chargement (15) ;
le préchauffage de la charge dans le conteneur de soute (17a) par du gaz de four ;
le transfert de la charge du conteneur de soute dans le puits de chargement (13a) ; et
le préchauffage de la charge dans le puits de chargement (13a) par du gaz de four.
